# EUROPEAN PATENT APPLICATION

(11) **EP 4 648 492 A1**
(43) Date of publication of application: **12.11.2025**
(21) Application number: 23925049.1
(22) Date of filing: 05.12.2023
(51) Int. Cl.: H04W 52/02

(54) **DATA TRANSMISSION METHOD AND RELATED DEVICE**

(30) Priority: 27.02.2023 CN 202310209568
(71) Applicant: Honor Device Co., Ltd., Shenzhen, Guangdong 518040 (CN)
(72) Inventor: YUAN, Kai, Shenzhen, Guangdong 518040 (CN)
(74) Representative: Isarpatent
(86) International application number: PCT/CN2023/136372
(87) International publication number: WO 2024/179103

(57) **Abstract**

This application discloses a data transmission method and a related device. According to the method, when a first application in an electronic device transmits data by using a first network link, the first application requests the electronic device to enable a second network link. In a case that a first preset condition is met and the first application meets a second preset condition, the electronic device enables the second network link in response to the request. In a case that the first preset condition is met and the first application does not meet the second preset condition, the electronic device does not respond to the request. The first preset condition is related to a temperature of the electronic device, and/or network quality of the first network link, and/or power of the electronic device. For a specific scenario, the electronic device may further disable one of the first network link and the second network link when transmitting data by using the two network links, and enable the disabled link. In this method, power consumption of the electronic device is reduced when Internet access experience is ensured by flexibly enabling or disabling a link.

## Description

This application claims priority to Chinese Patent Application No. 202310209568.3, filed with the China National Intellectual Property Administration on February 27, 2023 and entitled "DATA TRANSMISSION METHOD AND RELATED DEVICE", which is incorporated herein by reference in its entirety.

### TECHNICAL FIELD

This application relates to the field of communication technologies, and in particular, to a data transmission method and a related device.

### BACKGROUND

With the development of communication technologies, electronic devices, such as mobile phones, provide increasingly powerful functions. These electronic devices not only meet communication requirements of users, but also provide channels for obtaining external information and various ways of entertainment for the users. These electronic devices may be connected to a wireless fidelity (Wireless Fidelity, Wi-Fi) network, so as to transmit data by using a Wi-Fi link. In some scenarios, to ensure Internet access experience, the electronic devices may transmit data by using a mobile data link while transmitting data by using the Wi-Fi link. This manner of simultaneously enabling two links to transmit data may increase power consumption of the electronic devices.

### SUMMARY

This application provides a data transmission method and a related device, to better control a network link used by an electronic device for data transmission. Based on the data transmission method, an electronic device may flexibly control enabling and disabling of a network link for different scenarios, so as to reduce power consumption of the electronic device while ensuring Internet access experience of a user. Based on the data transmission method, the electronic device may restrict some third-party applications from enabling links, thereby reducing power consumption of the electronic device without affecting data transmission of some applications having a special requirement on a data transmission link.

According to a first aspect, some embodiments of this application provide a data transmission method. The data transmission method may include: A first application in an electronic device may request the electronic device to enable a second network link when the first application transmits data by using a first network link. The electronic device may respond to the request and enable the second network link in a case that a first preset condition is met and the first application meets a second preset condition, so that the first application may transmit data by using the first network link and the second network link. The electronic device may not respond to the request in a case that the first preset condition is met and the first application does not meet the second preset condition, so that the first application may transmit data only by using the first network link. The first preset condition is related to a temperature of the electronic device, and/or network quality of the first network link, and/or power of the electronic device. The first network link and the second network link are data transmission links corresponding to different types of networks.

In a solution provided by the foregoing embodiments, when transmitting data by using a first network link, a third-party application in an electronic device may further request to enable a second network link. In a case that a first preset condition is met, the electronic device may restrict some applications from enabling the second network link. Specifically, a third-party application that meets a second preset condition is not restricted from enabling the second network link, and a third-party application that does not meet the second preset condition is restricted from enabling the second network link. The first preset condition may be related to a temperature of the electronic device, and/or network quality of the first network link, and/or power of the electronic device. To be specific, the electronic device may restrict some applications from enabling another link for related scenarios of the temperature, the network quality, and the power. This method may allow some applications to enable the second network link, where these applications may transmit data by using two links at the same time, and may further deal with some private information transmission scenarios. A user can obtain good experience when using these applications. In addition, this method may further restrict some applications from enabling the second network link, thereby reducing power consumption of the electronic device.

It may be understood that, that a first application requests the electronic device to enable a second network link may specifically include: The first application sends a request for enabling the second network link to a CS (as shown in step S506).

It may be understood that, that the first preset condition is related to a temperature of the electronic device, and/or network quality of the first network link, and/or power of the electronic device may specifically mean: Types of parameters involved in the first preset condition may include at least one of the following: the temperature of the electronic device, the network quality of the first network link, and the power of the electronic device.

It may be understood that, that the first application transmits data only by using the first network link may specifically mean: The first application may transmit data by using the first network link instead of transmitting data by using the second network link.

It may be understood that the first application is a third-party application (for example, a video application or a game application). For related descriptions of the third-party application, refer to the following and related technical documents. Details are not described herein.

It may be understood that the temperature of the electronic device may refer to an entire temperature of the electronic device, or may refer to a back housing temperature, a chip temperature, or the like of the electronic device. This is not limited in this application.

It may be understood that the network quality of a network link may be determined based on parameters such as a data transmission rate, a latency, and a bit error rate of the network link. For details, refer to the following. Details are not described herein.

In some embodiments of this application, the first network link may be a Wi-Fi link, and the second network link may be a mobile data link.

In some other embodiments of this application, the first network link may be a mobile data link, and the second network link may be a Wi-Fi link.

In some embodiments of this application, that the electronic device enables a network link may specifically mean: The electronic device establishes the network link. Correspondingly, that the electronic device disables the network link may specifically mean: The electronic device releases the network link. For example, that the electronic device enables a Wi-Fi link may specifically include: a Wi-Fi link management module may send a request for establishing a Wi-Fi link to a wireless communication module, and the wireless communication module may trigger and perform a corresponding procedure of establishing a Wi-Fi link, so as to establish the Wi-Fi link. For example, that the electronic device enables a mobile data link may specifically include: A Telephony FWK may send a request for establishing a mobile data link to a mobile communication module, and the mobile communication module may trigger and perform a corresponding procedure of establishing a mobile data link, so as to establish the mobile data link.

In some embodiments of this application, that the electronic device enables a network link may specifically mean: The electronic device may transmit data by using the network link. Correspondingly, that the electronic device disables the network link may specifically mean: The electronic device cannot transmit data by using the network link.

With reference to the first aspect, in a possible implementation, that the first application meets a second preset condition may specifically include: The first application is a preset application. That the first application is a preset application may include: The first application is an application in a preset application list, or the first application is an application of a preset category.

In a solution provided by some embodiments of this application, for an application in a preset application list, the electronic device may not restrict the application from enabling the second network link. This method can reduce power consumption of the electronic device and meet special requirements of some applications for network links for data transmission.

It may be understood that the preset application list may be set based on an actual requirement. This is not limited in this application. For example, the preset application list may include a game application, a shopping application, and a video application. For another example, the preset application may include application A1, application A2, application A3, application A4, and application A5. It may be understood that categories of application A1, application A2, application A3, application A4, and application A5 may be the same or may be different.

In a solution provided by some embodiments of this application, for an application of a preset category, the electronic device may not restrict the application from enabling the second network link. This method can reduce power consumption of the electronic device and meet special requirements of an application of a special category for network links for data transmission.

With reference to the first aspect, in a possible implementation, the application of the preset category includes an application in which a security requirement meets a preset condition.

In a solution provided by some embodiments of this application, for an application in which a security requirement meets a preset condition, the electronic device may not restrict the application from enabling the second network link. The second network link may be a mobile data link. It may be understood that the security of the Wi-Fi link is not as high as the security of the mobile data link, the application in which the security requirement meets the preset condition may not be restricted from enabling the mobile data link. These applications may transmit some privacy information (for example, fund information and a password) based on a mobile data link with higher security.

With reference to the first aspect, in a possible implementation, the application of the preset category includes an application that requires, when enabled, identity authentication to be performed by using a subscriber identity module (SIM) card of the electronic device. The first network link may be a Wi-Fi link, and the second network link may be a mobile data link.

In a solution provided by some embodiments of this application, for an application that requires, when enabled, identity authentication to be performed by using a SIM card of the electronic device, the electronic device may not restrict the application from enabling the second network link. The second network link may be a mobile data link. A SIM card identification technology needs to be based on the mobile data link. The application that requires, when enabled, identity authentication to be performed by using the SIM card of the electronic device may not be restricted from enabling the mobile data link. These applications may implement SIM card identification based on the mobile data link, thereby implementing identity authentication, without inputting an account password to perform identity authentication. In addition, the mobile data link has higher security, thereby not only ensuring security, but also facilitating operations.

With reference to the first aspect, in a possible implementation, the application of the preset category includes a latency-sensitive application. The latency-sensitive application is an application that requires, when in use, a data transmission latency to be less than a preset latency.

In a solution provided by some embodiments of this application, for a latency-sensitive application, the electronic device may not restrict the application from enabling the second network link. The second network link may be a mobile data link, or may be a Wi-Fi link. The SIM card identification technology needs to be based on the mobile data link. The latency-sensitive application may not be restricted from enabling the mobile data link. These applications may perform data transmission based on two network links, thereby shortening a data transmission latency, so that users can obtain better experience when using these applications.

It may be understood that for related descriptions of the preset category, refer to the following. Details are not described herein.

It should be noted that in some embodiments of this application, some applications have higher transmission requirements on the Wi-Fi link. Therefore, in a case that the mobile data link is enabled and the Wi-Fi link is disabled, these applications may not be restricted from enabling the Wi-Fi link. For specific implementations, refer to the following. Details are not described herein.

With reference to the first aspect, in a possible implementation, before the first application requests the electronic device to enable a second network link, the data transmission method may further include: The electronic device determines whether the first preset condition is met. After the first application requests the electronic device to enable a second network link, the data transmission method may further include: The electronic device may determine whether the first application meets the second preset condition if the first preset condition is met.

In a solution provided by some embodiments of this application, the electronic device may transmit data by using only one link (for example, a Wi-Fi link). In this case, the electronic device may first determine whether the first preset condition is met. In a case that the first preset condition is met, the electronic device may prohibit an application that does not meet the second preset condition from enabling another link (for example, a mobile data link). By means of this method, the electronic device may first obtain an indication for restricting some applications from enabling another link. After a third-party application initiates a request for enabling another link, the electronic device determines whether the third-party application is a restricted application. To be specific, the electronic device does not need to determine, after the third-party application initiates the request, whether some applications need to be restricted from enabling another link. In this way, time for responding to a request can be saved, so that an unrestricted third-party application may quickly use the enabled another link to transmit data.

With reference to the first aspect, in a possible implementation, that the first preset condition is met may specifically include: The temperature of the electronic device is greater than a first temperature threshold, and/or the network quality of the first network link meets a first network quality condition. That the network quality of the first network link meets a first network quality condition may specifically include: A data transmission rate of the first network link is greater than a first data transmission rate.

In some embodiments of this application, that the first preset condition is met may specifically be: The temperature of the electronic device is greater than the first temperature threshold. In some embodiments of this application, that the first preset condition is met may specifically be: The network quality of the first network link meets the first network quality condition. In some embodiments of this application, that the first preset condition is met may specifically be: The power of the electronic device is less than a preset power. In some embodiments of this application, that the first preset condition is met may specifically be: The temperature of the electronic device is greater than the first temperature threshold, and the network quality of the first network link meets the first network quality condition. In some embodiments of this application, that the first preset condition is met may specifically be: The power of the electronic device is less than the preset power, and the network quality of the first network link meets the first network quality condition. In some embodiments of this application, that the first preset condition is met may specifically be: The power of the electronic device is less than the preset power, and the temperature of the electronic device is greater than the first temperature threshold. In some embodiments of this application, that the first preset condition is met may specifically be: The power of the electronic device is less than the preset power, the temperature of the electronic device is greater than the first temperature threshold, and the network quality of the first network link meets the first network quality condition.

It may be understood that the first temperature threshold may be temperature threshold_1. That the network quality of the first network link meets the first network quality condition may specifically mean: Wi-Fi link quality related information meets preset condition_1.

It may be understood that the first preset data transmission rate may be set based on an actual requirement. This is not limited in this application. It should be noted that the network quality of the first network link may further be determined based on parameters such as a latency and a bit error rate of the first network link. For details, refer to the following (such as step S505). Details are not described herein.

With reference to the first aspect, in a possible implementation, before the first application requests the electronic device to enable a second network link, the data transmission method may further include: The electronic device may display a first interface. The first interface may include a first icon corresponding to the second network link. In this case, the first icon is in a first state. After the electronic device enables the second network link in response to the request, the data transmission method may further include: The electronic device may display a second interface. The second interface may include the first icon. In this case, the first icon is in a second state.

In a solution provided by some embodiments of this application, after the electronic device enables the second network link in response to the request, the first icon displayed by the electronic device may change from the first state to the second state. This method can make a user perceive a state change of a current network link more intuitively.

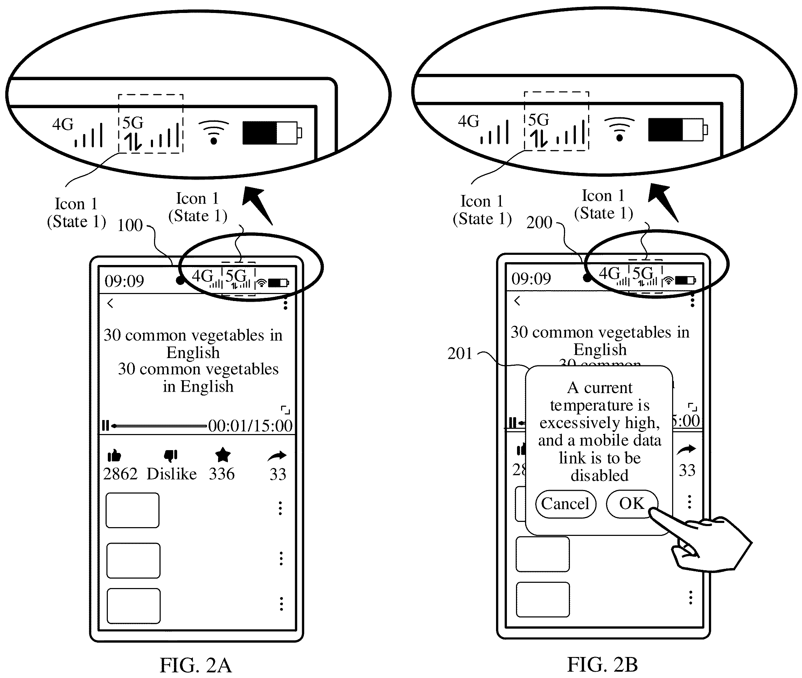

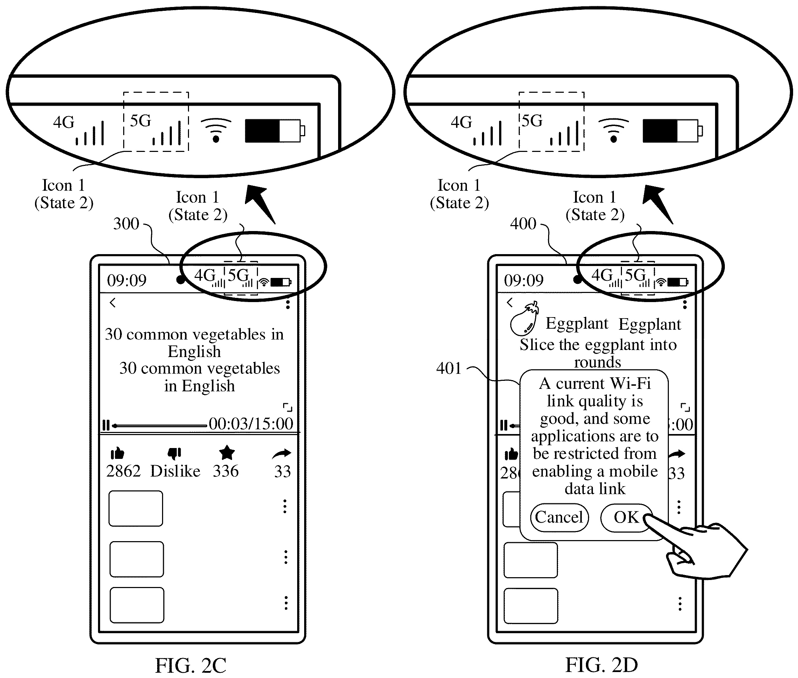

In some embodiments of this application, the first icon may be icon 1. The first state may be state 1. The second state may be state 2. The first interface may be a user interface 100 shown in FIG. 2A, and may alternatively be a user interface 200 shown in FIG. 2B. The second interface may be a user interface 300 shown in FIG. 2C.

With reference to the first aspect, in a possible implementation, the data transmission method may further include: In a case that the electronic device performs data transmission by using the first network link and the second network link, the electronic device may disable the first network link if a third preset condition is met. Alternatively, the electronic device may disable the second network link if a fourth preset condition is met. Alternatively, the electronic device may disable the first network link or the second network link if both the third preset condition and the fourth preset condition are met. The electronic device may disable the first network link if the third preset condition is met and the fourth preset condition is not met. The electronic device may disable the second network link if the fourth preset condition is met and the third preset condition is not met. The third preset condition may include at least one of the following: The temperature of the electronic device is greater than a second temperature threshold, the power of the electronic device is less than a first power, a data volume transmitted by the first network link is less than a first data volume, network quality of the second network link meets a second network quality condition, and the network quality of the first network link meets a third network quality condition. The fourth preset condition may include at least one of the following: The temperature of the electronic device is greater than the second temperature threshold, the power of the electronic device is less than the first power, a data volume transmitted by the second network link is less than a second data volume, the network quality of the second network link meets a fourth network quality condition, and the network quality of the first network link meets a fifth network quality condition.

In some embodiments of this application, in a case that the electronic device performs data transmission by using the first network link and the second network link, the electronic device may disable the first network link if the third preset condition is met. In this case, it is unnecessary to disable the second network link.

In some embodiments of this application, in a case that the electronic device performs data transmission by using the first network link and the second network link, the electronic device may disable the second network link if the fourth preset condition is met. In this case, it is unnecessary to disable the first network link.

In some embodiments of this application, in a case that the electronic device performs data transmission by using the first network link and the second network link, the electronic device may disable the first network link or the second network link if both the third preset condition and the fourth preset condition are met. In a case that the third preset condition is met and the fourth preset condition is not met, the electronic device may disable the first network link. In a case that the fourth preset condition is met and the third preset condition is not met, the electronic device may disable the second network link.

It may be understood that, in a case that the network quality of the second network link meets the second network quality condition, the network quality of the second network link is relatively good. The network quality of the second network link may be determined based on a data transmission rate, a latency, and a bit error rate of the second network link. For related descriptions that the network quality of the second network link meets the second network quality condition, refer to related descriptions of the first network quality condition, and refer to the following related descriptions. Details are not described herein.

Similarly, in a case that the network quality of the first network link meets the fifth network quality condition, the network quality of the first network link is relatively good. For details, refer to related descriptions of the first network quality condition and the second network quality condition, and refer to the following related descriptions. Details are not described herein.

It may be understood that, in a case that the network quality of the first network link meets the third network quality condition, the network quality of the first network link is relatively poor. The network quality of the first network link may be determined based on a data transmission rate, a latency, and a bit error rate of the first network link. For related descriptions that the network quality of the first network link meets the third network quality condition, refer to the following. Details are not described herein.

Similarly, in a case that the network quality of the second network link meets the fourth network quality condition, the network quality of the first network link is relatively poor. For details, refer to the following related descriptions. Details are not described herein.

It may be understood that, in a case that the first network link is a mobile data link, the first data volume may be a preset data volume mentioned below. In a case that the second network link is a mobile data link, the second data volume may be a preset data volume mentioned below.

It may be understood that, in a case that the first network link is a Wi-Fi link, that the network quality of the first network link meets the fifth network quality condition may specifically mean: Whether the Wi-Fi link quality related information meets preset condition_2. In a case that the second network link is a Wi-Fi link, that the network quality of the second network link meets the second network quality condition may specifically mean: Whether the Wi-Fi link quality related information meets preset condition_2.

It may be understood that the third preset condition may include that the data volume transmitted by the first network link is less than the first data volume, and the network quality of the second network link meets the second network quality condition. In this case, the electronic device may disable the first network link in a case that the network quality of the second network link is relatively good and a data stream transmitted by the first network link is relatively small. In this case, the network quality of the first network link is not necessarily poor.

Similarly, the fourth preset condition may include that the data volume transmitted by the second network link is less than the second data volume, and the network quality of the first network link meets the fifth network quality condition. In this case, the electronic device may disable the second network link in a case that the network quality of the first network link is relatively good and a data stream transmitted by the second network link is relatively small. In this case, the network quality of the second network link is not necessarily poor.

It may be understood that the second temperature threshold may be temperature threshold_2. The first power may be preset power_1.

With reference to the first aspect, in a possible implementation, the data transmission method may further include: The electronic device may enable the first network link in a case that a fifth preset condition is met after the electronic device disables the first network link. Alternatively, the electronic device may enable the second network link in a case that a sixth preset condition is met after the electronic device disables the second network link. The fifth preset condition may include at least one of the following: The network quality of the second network link meets a sixth network quality condition, the temperature of the electronic device is less than a third temperature threshold, and the power of the electronic device is greater than a second power. The sixth preset condition may include at least one of the following: The network quality of the first network link meets a seventh network quality condition, the temperature of the electronic device is less than the third temperature threshold, and the power of the electronic device is greater than the second power.

In some embodiments of this application, after the electronic device disables the first network link, to be specific, in a case that the electronic device changes from the state of enabling the first network link and the second network link at the same time to the state of enabling only the second network link and the fifth preset condition is met, the electronic device may enable the first network link.

In some embodiments of this application, after the electronic device disables the second network link, to be specific, in a case that the electronic device changes from the state of enabling the first network link and the second network link at the same time to the state of enabling only the first network link and the sixth preset condition is met, the electronic device may enable the second network link.

It may be understood that the third temperature threshold may be temperature threshold_3. The second power may be preset power_2.

It may be understood that, in a case that the network quality of the second network link meets the sixth network quality condition, the network quality of the second network link is relatively poor. For related descriptions that the network quality of the second network link meets the sixth network quality condition, refer to the following. Details are not described herein.

Similarly, in a case that the network quality of the first network link meets the seventh network quality condition, the network quality of the first network link is relatively poor. For related descriptions that the network quality of the first network link meets the seventh network quality condition, refer to the following. Details are not described herein.

It may be understood that, in a case that the second network link is a Wi-Fi link, that the network quality of the second network link meets the sixth network quality condition may specifically mean: The Wi-Fi link quality related information meets preset condition_3. In a case that the first network link is a Wi-Fi link, that the network quality of the first network link meets the seventh network quality condition may specifically mean: The Wi-Fi link quality related information meets preset condition_3.

With reference to the first aspect, in a possible implementation, types of parameters involved in the third preset condition are less than types of parameters involved in the fifth preset condition or types of parameters involved in the sixth preset condition, and types of parameters involved in the fourth preset condition are less than the types of parameters involved in the fifth preset condition or the types of parameters involved in the sixth preset condition.

That types of parameters involved in the third preset condition are less than types of parameters involved in the fifth preset condition or types of parameters involved in the sixth preset condition, and types of parameters involved in the fourth preset condition are less than the types of parameters involved in the fifth preset condition or the types of parameters involved in the sixth preset condition may include the following three cases: (1) In a case that the electronic device disables the first network link based on the third preset condition and enables the first network link based on the fifth preset condition, a quantity of condition entries included in the third preset condition is less than a quantity of condition entries included in the fifth preset condition. (2) In a case that the electronic device disables the second network link based on the fourth preset condition and enables the second network link based on the sixth preset condition, a quantity of condition entries included in the fourth preset condition is less than a quantity of condition entries included in the sixth preset condition. (3) In a case that the electronic device disables the first network link or the second network link based on the third preset condition and the fourth preset condition, enables the first network link based on the fifth preset condition, or enables the second network link based on the sixth preset condition, a sum of a quantity of condition entries included in the third preset condition and a quantity of condition entries included in the fourth preset condition used when the electronic device makes a link disabling decision is less than a quantity of condition entries included in the fifth preset condition or the sixth preset condition used when the electronic device makes a link disabling decision.

In a solution provided by some embodiments of this application, a condition for disabling a link by the electronic device is not as severe as a condition for enabling the link. By means of this method, the electronic device raises requirements for enabling two network links by the electronic device at the same time, so that it is not easy for the electronic device to enable two network links at the same time, thereby reducing power consumption of the electronic device to some extent.

With reference to the first aspect, in a possible implementation, the third preset condition is that the temperature of the electronic device is greater than the second temperature threshold. The fifth preset condition is: The network quality of the second network link meets the sixth network quality condition, and the temperature of the electronic device is less than the third temperature threshold.

It may be understood that, in a case that the electronic device disables the first network link based on the third preset condition and enables the first network link based on the fifth preset condition, the quantity of condition entries included in the third preset condition is less than the quantity of condition entries included in the fifth preset condition. In a possible implementation, the third preset condition may include any one of the following: The temperature of the electronic device is greater than the second temperature threshold, the power of the electronic device is less than the first power, the data volume transmitted by the first network link is less than the first data volume, the network quality of the second network link meets the second network quality condition, and the network quality of the first network link meets the third network quality condition. In this case, the fifth preset condition includes at least two of the following: The network quality of the second network link meets the sixth network quality condition, the temperature of the electronic device is less than the third temperature threshold, and the power of the electronic device is greater than the second power. In a possible implementation, the third preset condition may include any two of the following: The temperature of the electronic device is greater than the second temperature threshold, the power of the electronic device is less than the first power, the data volume transmitted by the first network link is less than the first data volume, the network quality of the second network link meets the second network quality condition, and the network quality of the first network link meets the third network quality condition. In this case, the fifth preset condition includes: The network quality of the second network link meets the sixth network quality condition, the temperature of the electronic device is less than the third temperature threshold, and the power of the electronic device is greater than the second power.

Similarly, in a case that the electronic device disables the second network link based on the fourth preset condition and enables the second network link based on the sixth preset condition, the quantity of condition entries included in the fourth preset condition is less than the quantity of condition entries included in the sixth preset condition. In a possible implementation, the fourth preset condition may include any one of the following: The temperature of the electronic device is greater than the second temperature threshold, the power of the electronic device is less than the first power, the data volume transmitted by the second network link is less than the second data volume, the network quality of the second network link meets the fourth network quality condition, and the network quality of the first network link meets the fifth network quality condition. In this case, the sixth preset condition includes any two of the following: The network quality of the first network link meets the seventh network quality condition, the temperature of the electronic device is less than the third temperature threshold, and the power of the electronic device is greater than the second power. In a possible implementation, the fourth preset condition may include any two of the following: The temperature of the electronic device is greater than the second temperature threshold, the power of the electronic device is less than the first power, the data volume transmitted by the second network link is less than the second data volume, the network quality of the second network link meets the fourth network quality condition, and the network quality of the first network link meets the fifth network quality condition. In this case, the sixth preset condition includes: The network quality of the first network link meets the seventh network quality condition, the temperature of the electronic device is less than the third temperature threshold, and the power of the electronic device is greater than the second power.

According to a second aspect, some embodiments of this application provide a data transmission method. The data transmission method may include: In a case that an electronic device performs data transmission by using a first network link and a second network link, the electronic device may disable the first network link if a third preset condition is met. Alternatively, the electronic device may disable the second network link if a fourth preset condition is met. Alternatively, the electronic device may disable the first network link or the second network link if both the third preset condition and the fourth preset condition are met. The electronic device may disable the first network link if the third preset condition is met and the fourth preset condition is not met. The electronic device may disable the second network link if the fourth preset condition is met and the third preset condition is not met. The third preset condition may include at least one of the following: A temperature of the electronic device is greater than a second temperature threshold, power of the electronic device is less than a first power, a data volume transmitted by the first network link is less than a first data volume, network quality of the second network link meets a second network quality condition, and network quality of the first network link meets a third network quality condition. The fourth preset condition may include at least one of the following: The temperature of the electronic device is greater than the second temperature threshold, the power of the electronic device is less than the first power, a data volume transmitted by the second network link is less than a second data volume, the network quality of the second network link meets a fourth network quality condition, and the network quality of the first network link meets a fifth network quality condition.

With reference to the second aspect, in a possible implementation, the data transmission method may further include: The electronic device may enable the first network link in a case that a fifth preset condition is met after the electronic device disables the first network link. Alternatively, the electronic device may enable the second network link in a case that a sixth preset condition is met after the electronic device disables the second network link. The fifth preset condition may include at least one of the following: The network quality of the second network link meets a sixth network quality condition, the temperature of the electronic device is less than a third temperature threshold, and the power of the electronic device is greater than a second power. The sixth preset condition may include at least one of the following: The network quality of the first network link meets a seventh network quality condition, the temperature of the electronic device is less than the third temperature threshold, and the power of the electronic device is greater than the second power.

With reference to the second aspect, in a possible implementation, types of parameters involved in the third preset condition are less than types of parameters involved in the fifth preset condition or types of parameters involved in the sixth preset condition, and types of parameters involved in the fourth preset condition are less than the types of parameters involved in the fifth preset condition or the types of parameters involved in the sixth preset condition.

With reference to the second aspect, in a possible implementation, the data transmission method may include at least one of the following: The third preset condition is that the temperature of the electronic device is greater than the second temperature threshold. The fifth preset condition is: The network quality of the second network link meets the sixth network quality condition, and the temperature of the electronic device is less than the third temperature threshold. The first network link is a Wi-Fi link, and the second network link is a mobile data link. Before a first application requests the electronic device to enable the second network link, the electronic device may display a first interface. The first interface includes a first icon corresponding to the second network link, and the first icon is in a first state. After the electronic device enables the second network link in response to the request of the first application, the electronic device displays a second interface. The second interface includes the first icon, and the first icon is in a second state.

It may be understood that, for beneficial effects that can be achieved by the method described in the second aspect or any implementation of the second aspect, refer to the beneficial effects in any possible implementation of the first aspect. Details are not described herein.

According to a third aspect, this application provides an electronic device. The electronic device includes: one or more processors and one or more memories. The one or more memories are coupled to the one or more processors. The memory is configured to store computer program code. The computer program code includes computer instructions. The one or more processors invoke the computer instructions to cause the electronic device to perform the method described in the first aspect or any implementation of the first aspect.

According to a fourth aspect, this application provides an electronic device. The electronic device includes: one or more processors and one or more memories. The one or more memories are coupled to the one or more processors. The memory is configured to store computer program code. The computer program code includes computer instructions. The one or more processors invoke the computer instructions to cause the electronic device to perform the method described in the second aspect or any implementation of the second aspect.

According to a fifth aspect, this application provides a computer storage medium. The computer storage medium includes computer instructions. When the computer instructions are run on an electronic device, the electronic device is caused to perform the method described in the first aspect or any implementation of the first aspect.

According to a sixth aspect, this application provides a computer storage medium. The computer storage medium includes computer instructions. When the computer instructions are run on an electronic device, the electronic device is caused to perform the method described in the second aspect or any implementation of the second aspect.

According to a seventh aspect, an embodiment of this application provides a chip. The chip may be applied to an electronic device. The chip includes one or more processors. The processor is configured to invoke computer instructions, to cause the electronic device to perform the method described in the first aspect or any implementation of the first aspect.

According to an eighth aspect, an embodiment of this application provides a chip. The chip may be applied to an electronic device. The chip includes one or more processors. The processor is configured to invoke computer instructions, to cause the electronic device to perform the method described in the second aspect or any implementation of the second aspect.

According to a ninth aspect, an embodiment of this application provides a computer program product including instructions. When the computer program product is run on an electronic device, the electronic device is caused to perform the method described in the first aspect or any implementation of the first aspect.

According to a tenth aspect, an embodiment of this application provides a computer program product including instructions. When the computer program product is run on an electronic device, the electronic device is caused to perform the method described in the second aspect or any implementation of the second aspect.

It may be understood that the electronic device provided in the third aspect, the computer storage medium provided in the fifth aspect, the chip provided in the seventh aspect, and the computer program product provided in the ninth aspect are all configured to perform the method described in the first aspect or any implementation of the first aspect. Therefore, for beneficial effects that can be achieved, refer to the beneficial effects in any possible implementation of the first aspect. Details are not described herein. The electronic device provided in the fourth aspect, the computer storage medium provided in the sixth aspect, the chip provided in the eighth aspect, and the computer program product provided in the tenth aspect are all configured to perform the method described in the second aspect or any implementation of the second aspect. Therefore, for beneficial effects that can be achieved, refer to the beneficial effects in any possible implementation of the second aspect. Details are not described herein.

### BRIEF DESCRIPTION OF DRAWINGS

FIG. 1A to FIG. 1C are schematic diagrams of a group of data transmission architecture according to an embodiment of this application;
FIG. 2A to FIG. 2H are schematic diagrams of a group of user interfaces according to an embodiment of this application;
FIG. 3A is a schematic diagram of a hardware structure of an electronic device according to an embodiment of this application;
FIG. 3B is a schematic diagram of a software structure of an electronic device according to an embodiment of this application.
FIG. 4 is a schematic diagram of interaction between software and hardware according to an embodiment of this application;
FIG. 5 is a flowchart of a data transmission method according to an embodiment of this application;
FIG. 6 is a flowchart of another data transmission method according to an embodiment of this application; and
FIG. 7 is a flowchart of still another data transmission method according to an embodiment of this application.

### DESCRIPTION OF EMBODIMENTS

The following clearly and completely describes technical solutions in embodiments of this application with reference to the accompanying drawings in the embodiments of this application. In the descriptions of the embodiments of this application, "/" means "or" unless otherwise specified. For example, A/B may represent A or B. In this specification, "and/or" describes only an association relationship for describing associated objects and indicates that three relationships may exist. For example, A and/or B may represent: A exists alone, A and B exist at the same time, and B exists alone. In addition, in the descriptions of the embodiments of this application, "a plurality of" represents two or more.

It should be understood that, the terms "first", "second", and the like in the specification, claims, and accompanying drawings of this application are used to distinguish between different objects, and are not used to describe a specific sequence. In addition, the terms "include", "have", and any variant thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

Embodiment mentioned in this application means that particular features, structures, or characteristics described with reference to the embodiment may be included in at least one embodiment of this application. The presence of the phrase in various places in the specification does not necessarily refer to the same embodiment, nor is it an independent or alternative embodiment that is mutually exclusive from other embodiments. A person skilled in the art explicitly or implicitly understands that embodiments described in this application may be combined with other embodiments.

With the development of communication technologies, electronic devices such as mobile phones can meet communication requirements of users and can provide channels for obtaining external information and various ways of entertainment for the users. These electronic devices may be connected to a Wi-Fi network, so as to transmit data by using a Wi-Fi link. However, to ensure Internet access experience, the electronic devices may transmit data by using a mobile data link while transmitting data by using the Wi-Fi link. This manner of simultaneously enabling two links to transmit data may increase power consumption of the electronic devices.

An embodiment of this application provides a data transmission method and a related device. According to the data transmission method provided by some embodiments, for a scenario such as an excessively high temperature/temperature drop, an excessively low power/power increase, and/or a good/poor link quality, an electronic device may enable/disable a corresponding link, and may restrict some third-party applications from enabling links, thereby reducing power consumption of the electronic device in a case that Internet access experience is ensured.

**A Wi-Fi link and a mobile data link involved in this application are first described.**

The Wi-Fi link involved in this embodiment of this application refers to a data transmission channel corresponding to a Wi-Fi network. The Wi-Fi network provides an Internet (Internet) access for a connected electronic device (i.e. a Wi-Fi device) based on radio waves. It may be understood that each Wi-Fi device may be connected to a wireless local area network (Wireless Local Area Networks, WLAN) to access the Internet and a wireless access point (Access Point, AP).

The mobile data link involved in this embodiment of this application is a data transmission channel corresponding to a data service of a cellular network. The cellular network refers to a mobile network used in a wide area. The cellular network connects the electronic device to a base station by using an air interface of a physical and link layer protocol. Each base station is connected to a mobile switching center, so that the electronic device is connected to a wide area network, facilitating establishment of a call and mobility network.

A data transmission system architecture provided in an embodiment of this application is described below.

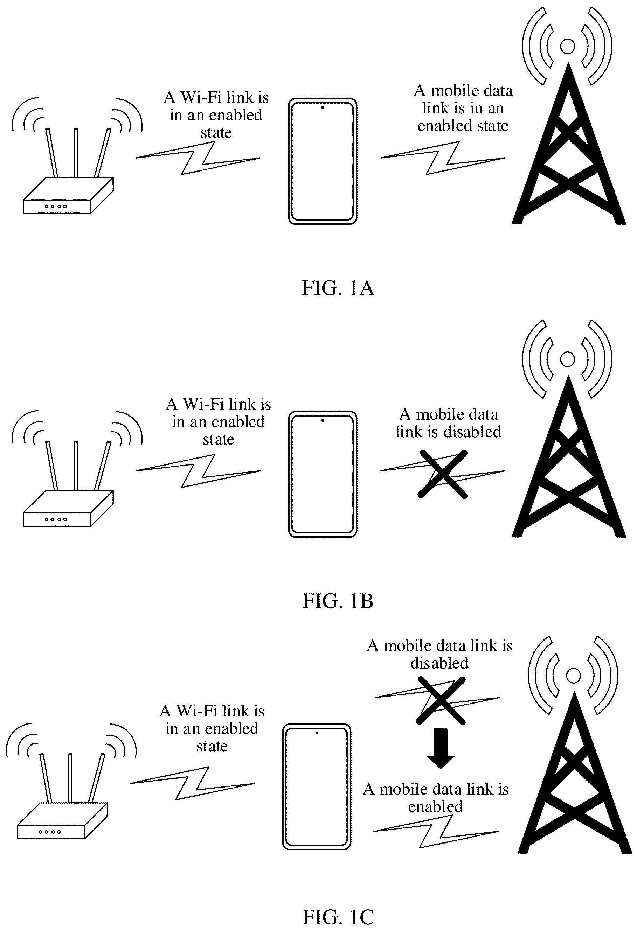

An electronic device may perform data transmission by using a Wi-Fi link and a mobile data link at the same time. As shown in FIG. 1A, after the electronic device establishes a Wi-Fi link and a mobile data link, the Wi-Fi link and the mobile data link are both in an enabled state, and the electronic device may transmit data by using the Wi-Fi link and the mobile data link at the same time. The electronic device may further disable either of the Wi-Fi link and the mobile data link, and perform data transmission only by using the link that is not disabled. As shown in FIG. 1B, the electronic device may disable the mobile data link. In this case, the Wi-Fi link is still in an enabled state, and the electronic device may transmit data only by using the Wi-Fi link. In a case that only one of the Wi-Fi link and the mobile data link is in an enabled state, the electronic device may enable the other link that is not enabled, thereby implementing data transmission by using the Wi-Fi link and the mobile data link at the same time. As shown in FIG. 1C, in a case that the electronic device enables only the Wi-Fi link and transmits data only by using the Wi-Fi link, the electronic device may enable the mobile data link and transmit data by using the Wi-Fi link and the mobile data link at the same time.

**The following describes some data transmission scenarios provided in this application.**

It may be understood that terms "interface" and "user interface" in this specification, claims, and accompanying drawings of this application are medium interfaces that are used for interaction and information exchange between an application or an operating system and a user, and implement conversion between an internal form of information and a form that can be accepted by the user. The user interface is usually represented in a form of a graphical user interface (graphic user interface, GUI), and is a user interface that is related to a computer operation and that is displayed in a graphic manner. The graphical user interface may be an interface element such as an icon, a window, or a control that is displayed on a display of an electronic device. The control may include visible interface elements such as an icon, a button, a menu, a tab, a text box, a dialog box, a status bar, a navigation bar, and a widget.

### 1. Data is transmitted by using a Wi-Fi link and a mobile data link at the same time (as shown in FIG. 2A)

A third-party application in the electronic device may perform data transmission by using the Wi-Fi link and the mobile data link at the same time.

For example, a video application in the electronic device may perform data transmission by using the Wi-Fi link and the mobile data link. As shown in FIG. 2A, the electronic device is currently connected to Wi-Fi, and has accessed a 5G network. To be specific, the mobile data link used by the electronic device at this time is a mobile data link corresponding to the 5G network, and a mobile data link corresponding to a 4G network is not used. It may be understood that, in a case that an access to the 5G network fails, the electronic device may attempt to access the 4G network. As shown in FIG. 2A, the video application in the electronic device may play a video and display a user interface 100. The user interface 100 may include icon 1, and a state of icon 1 is state 1. It may be understood that, in a case that the mobile data link is enabled, icon 1 is in state 1.

### 2. One of a Wi-Fi link and a mobile data link is disabled (as shown in FIG. 2B to FIG. 2C)

In a case that a third-party application in the electronic device performs data transmission by using the Wi-Fi link and the mobile data link at the same time, for scenarios such as an excessively high temperature, an excessively low power, and a poor link quality, the electronic device may make a corresponding link disabling decision.

In some embodiments of this application, the electronic device may disable a link based on the link disabling decision.

In some other embodiments of this application, in response to a user operation performed on the electronic device, the electronic device may disable a link based on the link disabling decision.

For example, in a case that an entire temperature of the electronic device is excessively high, the electronic device may disable the mobile data link. As shown in FIG. 2B, the electronic device may display a user interface 200. A state of icon 1 on the user interface 200 is state 1. To be specific, a current mobile data link is in an enabled state. The user interface 200 may include a prompt area 201. The prompt area 201 may display "A current temperature is excessively high, and a mobile data link is to be disabled". The prompt area 201 may include a cancel control and a confirm control. The cancel control is configured to trigger a cancel operation of disabling the mobile data link. The confirm control is configured to trigger disabling of the mobile data link. The electronic device may detect a user operation performed on the confirm control in the prompt area 201. In response to the user operation, the electronic device may disable the mobile data link, and display a user interface 300 as shown in FIG. 2C. A state of icon 1 on the user interface 300 is state 2. It may be understood that, in a case that the mobile data link is disabled, icon 1 is in state 2.

### 3. A third-party application is restricted from enabling a link that is not enabled in a Wi-Fi link and a mobile data link (as shown in FIG. 2D to FIG. 2F)

In a case that a third-party application in the electronic device performs data transmission only by using the Wi-Fi link or the mobile data link, for scenarios such as an excessively high temperature, an excessively low power, and a good quality of a currently enabled link, the electronic device may restrict the third-party application from enabling the other link.

For example, in a case that the current Wi-Fi link quality is good, the electronic device may restrict some applications from enabling the mobile data link. As shown in FIG. 2D, a video application in the electronic device may perform data transmission only by using the Wi-Fi link, and display a user interface 400. A state of icon 1 on the user interface 400 is state 2. To be specific, a current mobile data link is in a disabled state. The user interface 400 may further include a prompt area 401. "A current Wi-Fi link quality is good, and some applications are to be restricted from enabling a mobile data link" may be displayed in the prompt area 401. The prompt area 401 may include a cancel control and a confirm control. The electronic device may detect a user operation performed on the confirm control in the prompt area 401. In response to the user operation, the electronic device may restrict some third-party applications from enabling the mobile data link.

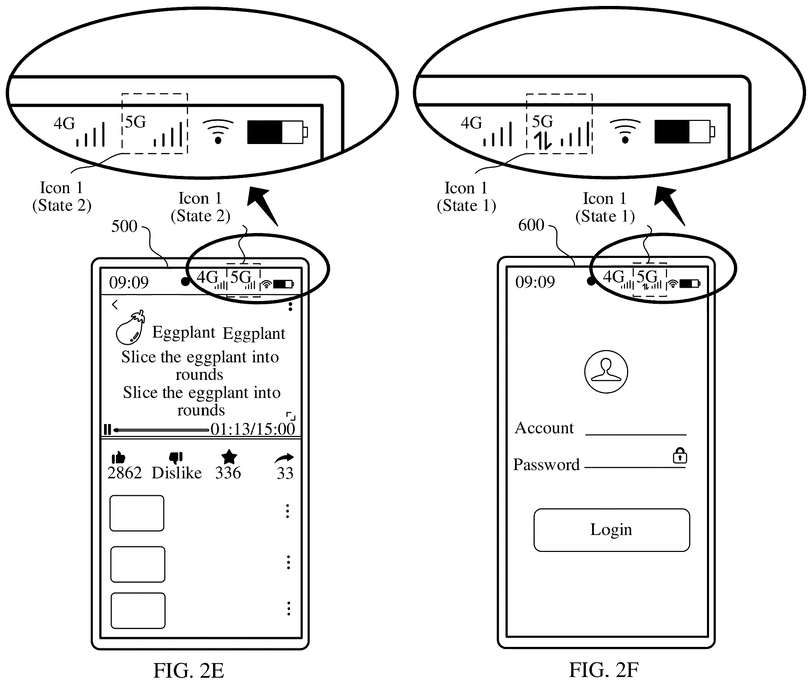

For example, the video application in the electronic device is restricted from enabling the mobile data link. As shown in FIG. 2E, the electronic device may display a user interface 500. A state of icon 1 on the user interface 500 is state 2. To be specific, a current mobile data link is in a disabled state.

For example, a bank application in the electronic device is not restricted from enabling the mobile data link. As shown in FIG. 2F, after initiating the bank application, the electronic device may display a user interface 600. A state of icon 1 on the user interface 600 is state 1. To be specific, a current mobile data link is in an enabled state.

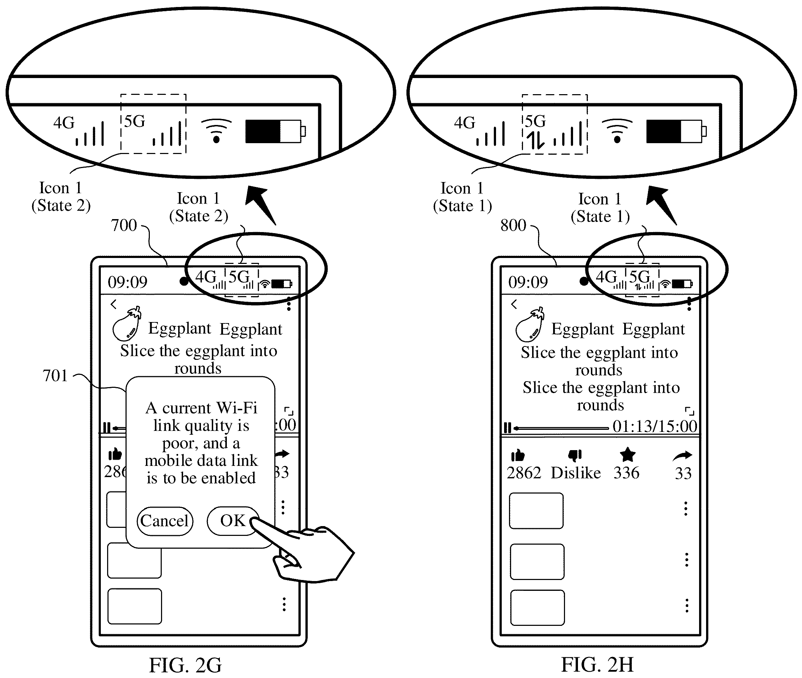

### 4. A disabled link in a Wi-Fi link and a mobile data link is restored (as shown in FIG. 2G to FIG. 2H)

In a case that a third-party application in the electronic device performs data transmission only by using the Wi-Fi link or the mobile data link, for scenarios such as temperature drop, power increase, and a poor quality of a currently enabled link, the electronic device may restore the other link that is disabled.

For example, when the electronic device displays the user interface 500, data is transmitted only by using the Wi-Fi link. In a case that the Wi-Fi link deteriorates, the electronic device may display a user interface 700 as shown in FIG. 2G. A state of icon 1 on the user interface 700 is state 2. To be specific, a current mobile data link is in a disabled state. The user interface 700 may further include a prompt area 701. The prompt area 701 may display "A current Wi-Fi link quality is poor, and a mobile data link is to be enabled". The prompt area 701 may include a cancel control and a confirm control. The electronic device may detect a user operation performed on the confirm control in the prompt area 701. In response to the user operation, the electronic device may enable the mobile data link, and display a user interface 800 as shown in FIG. 2H. A state of icon 1 on the user interface 800 is state 1.

It may be understood that the user operation mentioned in this application may specifically be a touch, a gesture, a voice, and other operations. This is not limited in this application.

It may be understood that for specific implementations of enabling/disabling a link in different scenarios and restricting an application from enabling a link, refer to the following. Details are not described herein.

**The following describes an apparatus involved in an embodiment of this application.**

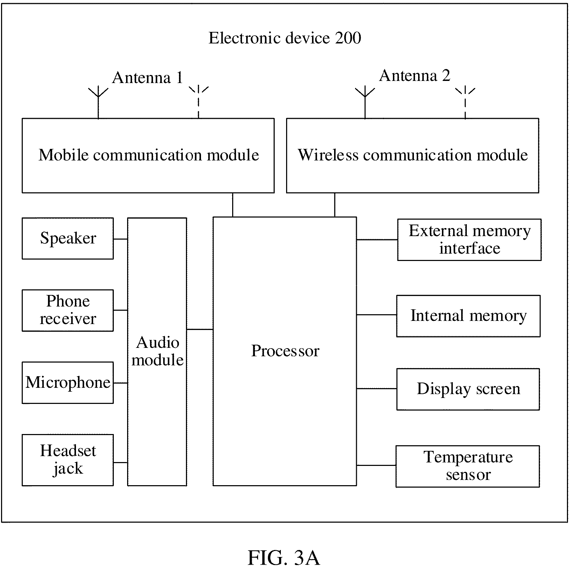

FIG. 3A is a schematic diagram of a hardware structure of an electronic device according to an embodiment of this application.

The electronic device may include a processor, an external memory interface, an internal memory, an audio module, a speaker, a phone receiver, a microphone, a headset jack, a display screen, a mobile communication module, a wireless communication module, and a temperature sensor.

The structure shown in this embodiment of this application does not constitute a specific limitation on the electronic device. In some embodiments of this application, the electronic device may include more components than those shown in the figure. For example, the electronic device may include a touch sensor, an acceleration sensor, a gyroscope sensor, and other types of sensors. In some embodiments of this application, the electronic device may include fewer components than those shown in the figure, some components may be combined, some components may be split, or different arrangements may be used. The components in the figure may be implemented by hardware, software, or a combination of software and hardware. An interface connection relationship between the modules illustrated in this embodiment of this application is merely a schematic description, and does not constitute a limitation on the structure of the electronic device.

The electronic device may implement a display function by using a graphics processing unit (Graphics Processing Unit, GPU), a display screen, an application processor, and the like. The GPU is a microprocessor for image processing, and is connected to the display screen and the application processor. The GPU is configured to perform mathematical and geometric computing for graphics rendering. The processor may include one or more GPUs, and execute program instructions to generate or change display information. The display screen is configured to display an image, a video, or the like. In some embodiments of this application, the electronic device may include one or more display screens.

In some embodiments of this application, the electronic device has capabilities of displaying user interfaces depending on display functions provided by the GPU, the display screen, and the application processor.

In some embodiments of this application, the electronic device has capabilities of displaying the user interfaces shown in FIG. 2A to FIG. 2H depending on the display functions provided by the GPU, the display screen, and the application processor.

The mobile communication module may provide a solution applied to the electronic device for wireless communication such as 2G, 3G, 4G, or 5G.

In some embodiments of this application, the mobile communication module is a hardware module for establishing a mobile data link in the electronic device, and may be configured to specifically implement establishment and release of the mobile data link. Data transmitted by using the mobile data link mentioned in this application may be sent or received by using the mobile communication module.

The wireless communication module may provide a wireless communication solution, which includes a WLAN (for example, a Wi-Fi network), a BT, a global navigation satellite system (Global Navigation Satellite System, GNSS), a frequency modulation (Frequency Modulation, FM), an NFC, an infrared technology (Infrared, IR), and the like and is applied to the electronic device. The wireless communication module may be one or more devices integrating at least one communication processing module. The wireless communication module may receive an electromagnetic wave by using antenna 2, or convert a signal into an electromagnetic wave for radiation. In some embodiments of this application, the electronic device may establish a wireless connection to another device by using the wireless communication module.

In some embodiments of this application, antenna 1 and the mobile communication module may be coupled, and antenna 2 and the wireless communication module may be coupled, so that the electronic device may communicate with a network and another device by using a wireless communication technology.

In some embodiments of this application, the wireless communication module is a hardware module for establishing a Wi-Fi link in the electronic device, and may be configured to specifically implement establishment and release of the Wi-Fi link. Data transmitted by using the Wi-Fi link mentioned in this application may be sent or received by using the wireless communication module.

The temperature sensor is configured to detect a temperature. In some embodiments of this application, the electronic device may detect an entire temperature of the electronic device by using the temperature sensor.

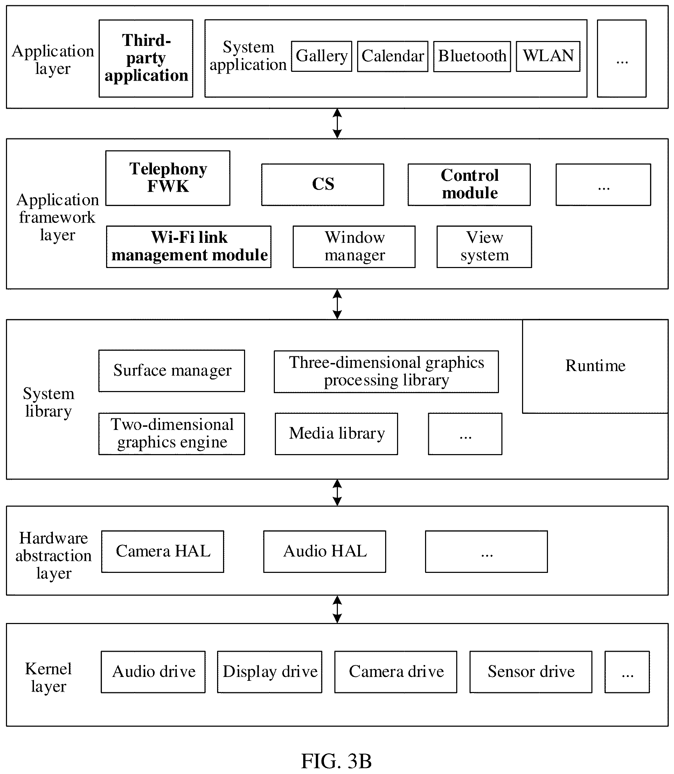

FIG. 3B is a schematic diagram of a software structure of an electronic device according to an embodiment of this application.

A software system of the electronic device may use a layered architecture, an event-driven architecture, a microkernel architecture, a microservice architecture, or a cloud architecture. In this embodiment of this application, an Android (Android) system with a layered architecture is used as an example to describe the software structure of the electronic device.

In the layered architecture, software is divided into several layers, and each layer has a clear role and task. The layers communicate with each other through a software interface. As shown in FIG. 3B, a software framework of the electronic device may include an application layer, an application framework layer, a system library, a runtime (Runtime), a hardware abstraction layer (HAL), and a kernel layer.

The application layer may include a series of application packages. In general, the application layer may include a system application and a third-party application. The system application is a series of core applications accompanying an Android system. For example, the system application may include an application such as a gallery, a calendar, Bluetooth, and a WLAN. The third-party application is an application selectable for installation by a user. In some embodiments of this application, the user may download and install the third-party application in an application store.

The application framework layer provides an application programming interface (Application Programming Interface, API) and a programming framework for the applications at the application layer. The application framework layer includes some predefined functions. The application framework layer may include a series of system services. The system service is a modular component that focuses on a specific function. A function provided by the application framework API may communicate with the system service to access underlying hardware.

As shown in FIG. 3B, the application framework layer may further include a network connection management service (Connectivity Service, CS), a telephony communication framework (Telephony FWK), and a Wi-Fi link management module. The CS may provide a data connection management service, is responsible for managing several types of network connections: mobile (Mobile), Wi-Fi, BT, and Ethernet (Ethernet), and provides virtual private network (Virtual Private Network, VPN) and tethering (Tethering) services. Tethering refers to connecting a mobile phone to a computer by using a universal serial bus (Universal Serial Bus, USB) interface, Bluetooth, or Wi-Fi, and providing a connection to the computer by using an Internet connection of the mobile phone. The Telephony FWK is a frame layer module of Android Telephony. The Telephony FWK may control enabling (i.e. connection) and disabling (i.e. disconnection) of a mobile data link. The Android Telephony is a core module that implements a communication function in an Android system. The Android Telephony mainly provides functions such as a voice, an SMS message, a data link, subscriber identity module (Subscriber Identity Module, SIM) card management, and a telephone directory. The Wi-Fi link management module may obtain quality-related information such as a data transmission rate, a latency, and a bit error rate of a Wi-Fi link, and may further control enabling and disabling of the Wi-Fi link.

The application framework layer may further include a window manager, a view system, and the like. For specific meanings and roles of these functional modules, refer to related technical documents. Details are not described herein.

The system library may include a plurality of functional modules, for example, a surface manager (Surface Manager), a media library (Media Libraries), a three-dimensional graphics processing library (for example, OpenGL ES), and a two-dimensional graphics engine (for example, SGL). For specific meanings and roles of these functional modules, refer to related technical documents. Details are not described herein. For specific meanings and roles of these functional modules, refer to related technical documents. Details are not described herein.

The runtime (Runtime) is responsible for scheduling and managing the system. The Runtime includes a core library and a virtual machine.

The hardware abstraction layer (HAL) is an interface layer between an operating system kernel and upper software, and aims to abstract hardware. The hardware abstraction layer is an abstract interface driven by a device kernel, and is configured to provide a higher-level Java API framework with an application programming interface for accessing an underlying device. The HAL may provide a standard interface to display device hardware functions to the higher-level Java API framework. The HAL includes a plurality of library modules, such as a camera HAL and an audio HAL. Each library module implements an interface for a specific type of hardware component. When the system framework layer API requires access to hardware of the portable device, the operating system loads a library module for the hardware component.

The kernel layer is a layer between hardware and software. The kernel layer is the foundation of the Android operating system. The kernel layer is responsible for functions such as a hardware driver, a network, power supply, system security, and memory management. The kernel layer is an intermediate layer between hardware and software, and is configured to transfer a request of an application program to the hardware. The kernel layer may include a display drive, a camera drive, an audio drive, a sensor drive, and the like.

It should be noted that a schematic diagram of a software architecture of an electronic device shown in FIG. 3B provided in this application is merely used as an example, and does not limit a specific module division in different layers of an Android operating system. For details, refer to the introduction to a software architecture of the Android operating system in the conventional technology. In addition, the data transmission method provided in this application may alternatively be implemented based on another operating system. Examples are not provided in this application one by one.

**Based on the software and hardware structures of the electronic device shown in** **FIG. 3A** **and** **FIG. 3B****, a data transmission method provided in an embodiment of this application is described from a perspective of software and hardware interaction.**

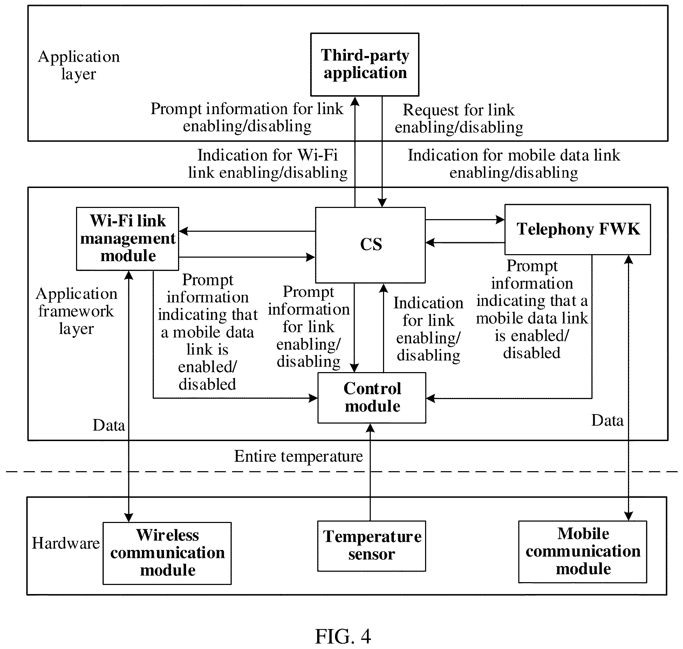

Refer to FIG. 4. FIG. 4 is a schematic diagram of software and hardware interaction according to an embodiment of this application.

As shown in FIG. 4, a third-party application may send a request for enabling/disabling links (i.e. a Wi-Fi link and a mobile data link) to a CS. After receiving the request for enabling/disabling the links, the CS may send an indication for enabling/disabling the mobile data link to a Telephony FWK, or may send an indication for enabling/disabling the Wi-Fi link to a Wi-Fi link management module. After receiving the indication for enabling/disabling the mobile data link, the Telephony FWK may enable/disable the mobile data link, and send, to the CS and a control module, prompt information indicating that the mobile data link has been enabled/disabled. After receiving the indication for enabling/disabling the Wi-Fi link, the Wi-Fi link management module may enable/disable the Wi-Fi link, and send, to the CS and the control module, prompt information indicating that the Wi-Fi link has been enabled/disabled.

In some embodiments of this application, in a case that a third-party application in an electronic device performs data transmission only by using one of the Wi-Fi link and the mobile data link, for scenarios such as an excessively high temperature, an excessively low power, and a good quality of a currently enabled link, the electronic device may restrict the third-party application from enabling the other link. For example, a temperature sensor may send an entire temperature to the control module, and the control module may determine, based on the entire temperature, whether to restrict the third-party application from enabling the other link.

In some embodiments of this application, in a case that the third-party application in the electronic device performs data transmission by using the Wi-Fi link and the mobile data link at the same time, for scenarios such as an excessively high temperature, an excessively low power, and a poor link quality, the electronic device may make a corresponding link disabling decision. For example, the temperature sensor may send the entire temperature to the control module, and the control module may determine, based on the entire temperature, whether to disable the Wi-Fi link and the mobile data link.

In a case that the third-party application in the electronic device performs data transmission only by using one of the Wi-Fi link and the mobile data link, for scenarios such as temperature drop, power increase, and link quality restoration, the electronic device may re-make a link enabling decision. For example, the temperature sensor may send the entire temperature to the control module, and the control module may determine, based on the entire temperature, whether to restore a link that is not enabled in the Wi-Fi link and the mobile data link.

It may be understood that data transmitted by using the Wi-Fi link in the electronic device may be sent or received by using a wireless communication module, and data transmitted by using the mobile data link in the electronic device may be sent or received by using a mobile communication module.

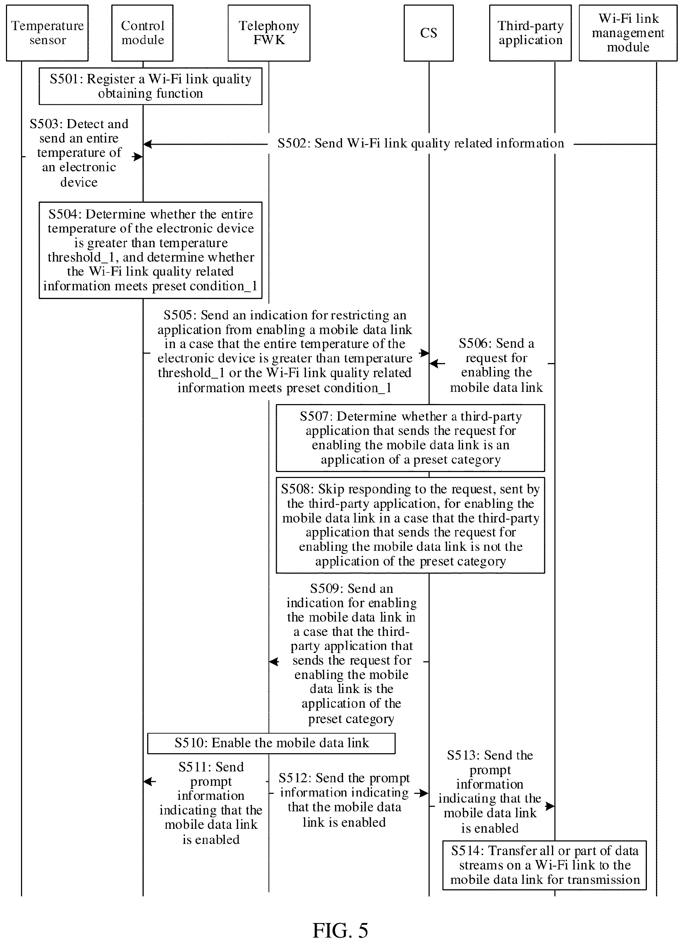

**The following describes specific implementations of the foregoing embodiments with reference to** **FIG. 5 to FIG. 7****.**

### 1. In a case that data is transmitted by using one of a Wi-Fi link and a mobile data link, an electronic device restricts a third-party application from enabling the other link (as shown in FIG. 5).

In a case that the third-party application in the electronic device performs data transmission only by using one of the Wi-Fi link and the mobile data link, for scenarios such as an excessively high temperature, an excessively low power, and a good quality of a currently enabled link, the electronic device may restrict the third-party application from enabling the other link.

A specific implementation of restricting from enabling the mobile data link in a case that the Wi-Fi link is enabled is illustrated below with reference to FIG. 5.

S501: A control module registers a Wi-Fi link quality obtaining function.

The control module may register the Wi-Fi link quality obtaining function. The Wi-Fi link quality obtaining function is used for obtaining Wi-Fi link quality related information. It may be understood that the Wi-Fi link quality related information may include a data transmission rate, a bit error rate, a latency, and the like of a Wi-Fi link.

In some embodiments of this application, after an electronic device is powered on, the control module may register the Wi-Fi link quality obtaining function. To be specific, when the electronic device performs step S501, the Wi-Fi link may not be enabled.

In some embodiments of this application, in a case that the Wi-Fi link is in an enabled state, the control module may register the Wi-Fi link quality obtaining function. To be specific, when the electronic device performs step S501, the Wi-Fi link has been enabled, and the electronic device may transmit data only by using the Wi-Fi link.

S502: A Wi-Fi link management module sends Wi-Fi link quality related information to the control module.

After the control module registers the Wi-Fi link quality obtaining function, the Wi-Fi link management module may send the Wi-Fi link quality related information to the control module.

In some embodiments of this application, after the control module registers the Wi-Fi link quality obtaining function, the Wi-Fi link management module sends the Wi-Fi link quality related information to the control module at an interval of t1. It may be understood that t1 may be set according to an actual requirement (for example, t1 may be 5 seconds). This is not limited in this application.

In some embodiments of this application, the control module registers the Wi-Fi link quality obtaining function after the electronic device is powered on. In this case, after the Wi-Fi link is enabled, the Wi-Fi link management module sends the Wi-Fi link quality related information to the control module. To be specific, when the electronic device performs step S502, the Wi-Fi link may not be enabled. However, in some embodiments of this application, the control module registers the Wi-Fi link quality obtaining function in a case that the Wi-Fi link is in an enabled state. In this case, because the Wi-Fi link is originally in an enabled state, the Wi-Fi link management module may send the Wi-Fi link quality related information to the control module immediately after registration of the function is completed. To be specific, when the electronic device performs step S502, the Wi-Fi link has been enabled, and the electronic device may transmit data only by using the Wi-Fi link.

Correspondingly, the control module may receive the Wi-Fi link quality related information sent by the Wi-Fi link management module.

S503: A temperature sensor detects an entire temperature of an electronic device, and sends the entire temperature of the electronic device to the control module.

It may be understood that the temperature sensor may detect the entire temperature of the electronic device, and send the detected entire temperature of the electronic device to the control module.

In some embodiments of this application, the temperature sensor detects the entire temperature of the electronic device at an interval of t2, and sends the entire temperature of the electronic device to the control module at an interval of t3. It may be understood that t2 and t3 may be the same (for example, t2 and t3 are both 5 seconds), or may be different (for example, t2 is 5 seconds and t3 is 10 seconds). Specific values of t2 and t3 may be set according to an actual requirement. This is not limited in this application.

In some embodiments of this application, after the electronic device is powered on, the temperature sensor may detect the entire temperature of the electronic device, and send the entire temperature of the electronic device to the control module. To be specific, when the electronic device performs step S503, the Wi-Fi link may not be enabled.

In some embodiments of this application, in a case that the Wi-Fi link is in an enabled state, the temperature sensor detects the entire temperature of the electronic device, and sends the entire temperature of the electronic device to the control module. To be specific, when the electronic device performs step S503, the Wi-Fi link has been enabled.

Correspondingly, the control module may receive the entire temperature of the electronic device sent by the temperature sensor.

S504: The control module determines whether the entire temperature of the electronic device is greater than temperature threshold_1, and determines whether the Wi-Fi link quality related information meets preset condition_1.

After receiving the entire temperature of the electronic device sent by the temperature sensor, the control module may determine whether the entire temperature of the electronic device is greater than temperature threshold_1. It may be understood that temperature threshold_1 may be set according to an actual requirement. This is not limited in this application. For example, temperature threshold_1 may be 40 degrees Celsius. For another example, temperature threshold_1 may be between 40 degrees Celsius and 55 degrees Celsius. For another example, temperature threshold_1 may not exceed 50 degrees Celsius.

Similarly, after receiving the Wi-Fi link quality related information sent by the Wi-Fi link management module, the control module may determine whether the Wi-Fi link quality related information meets preset condition_1. If the Wi-Fi link quality related information meets preset condition_1, a Wi-Fi link quality is good.

It may be understood that, that the Wi-Fi link quality related information meets preset condition_1 specifically means that some or all parameters in the Wi-Fi link quality related information meet a preset range requirement. Descriptions are provided below by using an example in which the Wi-Fi link quality related information includes three parameters: a data transmission rate, a bit error rate, and a latency of the Wi-Fi link.

In a possible implementation, that the Wi-Fi link quality related information meets preset condition_1 may specifically include: The data transmission rate of the Wi-Fi link is greater than data transmission rate_1, the bit error rate of the Wi-Fi link is less than bit error rate_1, and the latency of the Wi-Fi link is less than latency_1.

In a possible implementation, that the Wi-Fi link quality related information meets preset condition_1 may specifically include: The data transmission rate of the Wi-Fi link is greater than data transmission rate_1, the bit error rate of the Wi-Fi link is less than bit error rate_1, or the latency of the Wi-Fi link is less than latency_1.

In a possible implementation, that the Wi-Fi link quality related information meets preset condition_1 may specifically include: The data transmission rate of the Wi-Fi link is greater than data transmission rate_1 and the bit error rate of the Wi-Fi link is less than bit error rate_1, or the data transmission rate of the Wi-Fi link is greater than data transmission rate_1 and the latency of the Wi-Fi link is less than latency_1, or the bit error rate of the Wi-Fi link is less than bit error rate_1 and the latency of the Wi-Fi link is less than latency_1.

It may be understood that data transmission rate_1, bit error rate_1, and latency_1 may be set based on an actual requirement. This is not limited in this application.

Certainly, that the Wi-Fi link quality related information meets preset condition_1 may alternatively be implemented in another manner. This is not limited in this application.

S505: The control module sends, to a CS, an indication for restricting an application from enabling a mobile data link in a case that the entire temperature of the electronic device is greater than temperature threshold_1 or the Wi-Fi link quality related information meets preset condition_1.

The control module sends, to the CS, the indication for restricting the application from enabling the mobile data link in a case that the entire temperature of the electronic device is greater than temperature threshold_1 or the Wi-Fi link quality related information meets preset condition_1. To be specific, if the entire temperature of the electronic device is greater than temperature threshold_1, the control module may send, to the CS, the indication for restricting the application from enabling the mobile data link. If the Wi-Fi link quality related information meets preset condition_1, the control module may also send, to the CS, the indication for restricting the application from enabling the mobile data link.

In some embodiments of this application, the control module may send, to the CS, the indication for restricting the application from enabling the mobile data link in a case that the entire temperature of the electronic device is greater than temperature threshold_1 and the Wi-Fi link quality related information meets preset condition_1.

In some embodiments of this application, the control module may send, to the CS, the indication for restricting the application from enabling the mobile data link only in a case that the entire temperature of the electronic device is greater than temperature threshold_1. In this case, the control module does not need to consider the Wi-Fi link quality.

In some other embodiments of this application, the control module sends, to the CS, the indication for restricting the application from enabling the mobile data link only in a case that the Wi-Fi link quality related information meets preset condition_1. In this case, the control module does not need to consider the entire temperature of the electronic device.

In some embodiments of this application, in a case that power of the electronic device is less than a preset power, the control module may send, to the CS, the indication for restricting the application from enabling the mobile data link. It may be understood that the preset power may be set based on an actual requirement. This is not limited in this application. For example, the preset power may be 20%.

In some embodiments of this application, in a case that the entire temperature of the electronic device is greater than temperature threshold_1 and the power of the electronic device is less than the preset power, the control module sends, to the CS, the indication for restricting the application from enabling the mobile data link.

In some embodiments of this application, in a case that the Wi-Fi link quality related information meets preset condition_1 and the power of the electronic device is less than the preset power, the control module sends, to the CS, the indication for restricting the application from enabling the mobile data link.

In some embodiments of this application, in a case that the entire temperature of the electronic device is greater than temperature threshold_1, the Wi-Fi link quality related information meets preset condition_1, and the power of the electronic device is less than the preset power, the control module sends, to the CS, the indication for restricting the application from enabling the mobile data link.

Correspondingly, the CS may receive the indication, sent by the control module, for restricting the application from enabling the mobile data link.

S506: A third-party application sends, to the CS, a request for enabling the mobile data link.

The third-party application may send, to the CS, the request for enabling the mobile data link.

Correspondingly, the CS may receive the request, sent by the third-party application, for enabling the mobile data link.

S507: The CS determines whether the third-party application that sends the request for enabling the mobile data link is an application of a preset category.

After the CS receives the indication, sent by the control module, for restricting the application from enabling the mobile data link, if the request, sent by the third-party application, for enabling the mobile data link, is received, it may be determined whether the third-party application that sends the request for enabling the mobile data link is the application of the preset category.

In some embodiments of this application, the application of the preset category may include an application in which a security requirement meets a preset condition. In a possible implementation, the application in which the security requirement meets the preset condition is an application that requires, when enabled, a private link (for example, a mobile data link) to perform identity authentication. It may be understood that the identity authentication may include an identity authentication manner such as inputting an account and a password. In a possible implementation, the application in which the security requirement meets the preset condition is an application related to important private information such as fund (for example, a bank application or a wealth management application). In a possible implementation, the application in which the security requirement meets the preset condition is an application that is voluntarily set by a user and has a relatively high security requirement.

The security of the mobile data link is higher than the security of the Wi-Fi link. For an application having a high security requirement, some data related to privacy (for example, an account, a password, and fund) may be transmitted by using the mobile data link. In this way, power consumption of the electronic device can be reduced while ensuring privacy security of the user.

In some embodiments of this application, the application of the preset category may include an application that requires, when enabled, identity authentication to be performed by using a subscriber identity module (Subscriber Identity Module, SIM) card. In a possible implementation, for a registered user, the application may identify a number by using the SIM card of the electronic device, and determine whether the number is registered in the application. If the number is registered in the application, the application may succeed in comparison, and identity authentication may be completed. In a possible implementation, for an unregistered user, the application may identify a number by using the SIM card, and determine whether the number meets an object-oriented requirement of this type of application. To be specific, whether the application can provide a service to the number is determined. If the number meets the object-oriented requirement of the application, identity authentication succeeds. For example, if the application only faces users in a specified area, the application can only provide a service for the users in the specified area but cannot provide a service for users in another area. In this case, if the application determines that a number corresponding to the SIM card in the electronic device is a number of the particular area, the application may provide a service for the electronic device.

The SIM card is a subscriber identity card used by a mobile network user, and a mobile network relates to the mobile data link. Therefore, it can be known that a SIM card identification technology relates to the mobile data link. For the application that requires, when enabled, identity authentication to be performed by using the SIM card, data related to the SIM card may be transmitted by using the mobile data link. In addition, because the security of the mobile data link is higher than the security of the Wi-Fi link, privacy information such as a mobile phone number of a user can be more protected by performing SIM card identification by using the mobile data link.

In some embodiments of this application, the application of the preset category may include a latency-sensitive application. The latency-sensitive application is an application that requires, when in use, a data transmission latency to be less than a preset latency, for example, a game application, an acceleration application, or a live streaming application. It may be understood that the preset latency may be set based on an actual requirement. This is not limited in this application. For example, the preset latency may be 5 milliseconds.

In some embodiments of this application, the application of the preset category may further include an application frequently used by a user.

In some embodiments of this application, the application of the preset category may further include several applications voluntarily set by the user.

It may be understood that in some embodiments of this application, the electronic device may set an application list. The application list may include the foregoing application of the preset category. It may be understood that the CS may determine whether the third-party application that sends the request for enabling the mobile data link is an application in the application list.

S508: In a case that the third-party application that sends the request for enabling the mobile data link is not the application of the preset category, the CS does not respond to the request, sent by the third-party application, for enabling the mobile data link.

It may be understood that if the third-party application that sends the request for enabling the mobile data link is not the application of the preset category, the CS does not respond to the request, sent by the third-party application, for enabling the mobile data link.

In some embodiments of this application, if the third-party application that sends, to the CS, the request for enabling the mobile data link is not the application of the preset category, the CS may discard the request, sent by the third-party application, for enabling the mobile data link.

In some embodiments of this application, if the third-party application that sends, to the CS, the request for enabling the mobile data link is not the application of the preset category, the CS may return rejection information, so as to reject the request, sent by the third-party application, for enabling the mobile data link.

S509: In a case that the third-party application that sends the request for enabling the mobile data link is the application of the preset category, the CS sends, to a Telephony FWK, an indication for enabling the mobile data link.

It may be understood that if the third-party application that sends the request for enabling the mobile data link is not the application of the preset category, the CS sends, to the Telephony FWK, the indication for enabling the mobile data link.

Correspondingly, the Telephony FWK may receive the indication, sent by the CS, for enabling the mobile data link.

S510: The Telephony FWK enables the mobile data link.

After receiving the indication, sent by the CS, for enabling the mobile data link, the Telephony FWK may enable the mobile data link. In some embodiments of this application, the Telephony FWK may invoke an interface (for example, setInternalDataEnabled) to enable the mobile data link.

S511: The Telephony FWK sends, to the control module, prompt information indicating that the mobile data link is enabled.

After the Telephony FWK enables the mobile data link, the prompt information indicating that the mobile data link is enabled may be sent to the control module.

Correspondingly, the control module may receive the prompt information, sent by the Telephony FWK, indicating that the mobile data link is enabled.

It should be noted that the control module may register a link connection state callback function. After registering the link connection state callback function, the control module may obtain connection states of the Wi-Fi link and the mobile data link. Specifically, once the connection state of the Wi-Fi link changes, the Wi-Fi link management module may send the changed connection state of the Wi-Fi link to the control module. Similarly, once the connection state of the mobile data link changes, the Telephony FWK may send the changed connection state of the mobile data link to the control module.

In some embodiments of this application, the control module in the electronic device may register the link connection state callback function after the electronic device is started and powered on.

In some embodiments of this application, the control module may store current connection states of the Wi-Fi link and the mobile data link, and update the current connection states in a case that the current connection states of the Wi-Fi link and/or the mobile data link change. In this case, after receiving the prompt information, sent by the Telephony FWK, indicating that the mobile data link is enabled, the control module may update the current connection state of the mobile data link from a disabled state to an enabled state.

S512: The Telephony FWK sends, to the CS, the prompt information indicating that the mobile data link is enabled.

After the Telephony FWK enables the mobile data link, the prompt information indicating that the mobile data link is enabled may be sent to the CS.

Correspondingly, the CS may receive the prompt information, sent by the Telephony FWK, indicating that the mobile data link is enabled.

S513: The CS sends, to the third-party application, the prompt information indicating that the mobile data link is enabled.

After receiving the prompt information, sent by the Telephony FWK, indicating that the mobile data link is enabled, the CS may further send, to the third-party application, the prompt information indicating that the mobile data link is enabled, so as to notify the third-party application that the mobile data link is enabled.

Correspondingly, the third-party application may receive the prompt information, sent by the CS, indicating that the mobile data link is enabled.

S514: The third-party application transfers all or part of data streams on a Wi-Fi link to the mobile data link for transmission.

After receiving the prompt information, sent by the CS, indicating that the mobile data link is enabled, the third-party application may transfer all or part of the data streams on the Wi-Fi link to the mobile data link for transmission.

It may be understood that a sequence of step S502 and step S503 is not limited in this application.

It may be understood that, in a case that the control module does not send the indication for restricting the application from enabling the mobile data link to the CS, after receiving the request, sent by the third-party application, for enabling the mobile data link (for example, step S506), the CS may send the indication for enabling the mobile data link to the Telephony FWK. Correspondingly, after receiving the indication for enabling the mobile data link, the Telephony FWK may continue to perform step S510 to step S512.

It may be understood that, in a case that the Wi-Fi link is in a disabled state and the mobile data link is in an enabled state, the electronic device may also restrict, in a manner similar to that shown in FIG. 5, the third-party application from enabling the Wi-Fi link.

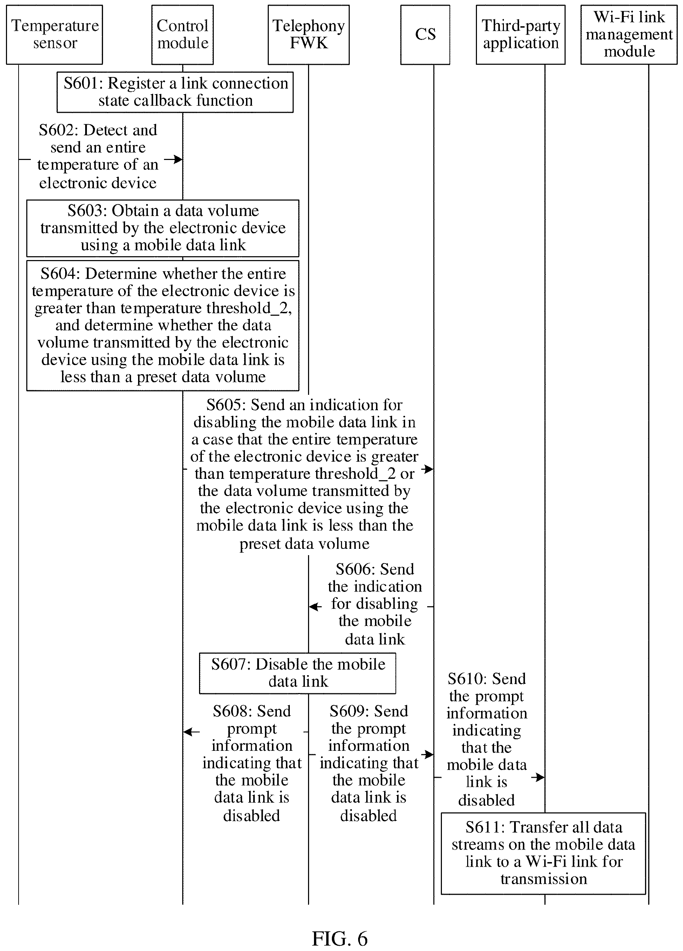

### 2. In a case that data is transmitted by using a Wi-Fi link and a mobile data link, one of the links is disabled (as shown in FIG. 6).

In a case that a third-party application in an electronic device performs data transmission by using the Wi-Fi link and the mobile data link at the same time, for scenarios such as an excessively high temperature, an excessively low power, and a poor link quality, the electronic device may make a corresponding link disabling decision.

A specific implementation of one link disabling decision is illustrated below with reference to FIG. 6.

S601: A control module registers a link connection state callback function.

The control module may register the link connection state callback function. After registering the link connection state callback function, the control module may obtain connection states of a Wi-Fi link and a mobile data link. For details, refer to the foregoing. Details are not described herein.

In some embodiments of this application, after the electronic device is powered on, the control module may register the link connection state callback function. To be specific, when the electronic device performs step S601, the Wi-Fi link and the mobile data link may not be enabled.

In some embodiments of this application, in a case that the Wi-Fi link and the mobile data link are both in an enabled state, the control module may register the link connection state callback function. To be specific, when the electronic device performs step S601, the Wi-Fi link and the mobile data link have been enabled, and the electronic device may transmit data by using the Wi-Fi link and the mobile data link at the same time.

S602: A temperature sensor detects an entire temperature of an electronic device, and sends the entire temperature of the electronic device to the control module.

It may be understood that for a specific implementation of step S602, refer to step S503. Details are not described herein.

S603: The control module obtains a data volume transmitted by the electronic device using a mobile data link.

The control module may obtain the data volume transmitted by the electronic device using the mobile data link. In some embodiments of this application, the control module may obtain, by using a module related to a network adapter at a bottom layer, the data volume transmitted by using the mobile data link.

In some embodiments of this application, when the electronic device performs step S602 and step S603, the Wi-Fi link and the mobile data link may not be in an enabled state. In some other embodiments of this application, when the electronic device performs step S602 and step S603, the Wi-Fi link and the mobile data link are both in an enabled state, and the electronic device may transmit data by using the Wi-Fi link and the mobile data link at the same time.

S604: The control module determines whether the entire temperature of the electronic device is greater than temperature threshold_2, and determines whether the data volume transmitted by the electronic device using the mobile data link is less than a preset data volume.

After receiving the entire temperature of the electronic device sent by the temperature sensor, the control module may determine whether the entire temperature of the electronic device is greater than temperature threshold_2. It may be understood that temperature threshold_2 may be set according to an actual requirement. This is not limited in this application. Temperature threshold_2 may be the same as temperature threshold_1, or may be different from temperature threshold_1. For example, temperature threshold_1 may be 40 degrees Celsius, and temperature threshold_2 may be 50 degrees Celsius. Similar to temperature threshold_1, temperature threshold_2 may also be set in a particular temperature range (for example, 40 degrees Celsius to 50 degrees Celsius).

After obtaining mobile data link quality related information, the control module may further determine whether the data volume transmitted by the electronic device using the mobile data link is less than the preset data volume. It may be understood that the preset data volume may be set based on an actual requirement. This is not limited in this application.

S605: In a case that the entire temperature of the electronic device is greater than temperature threshold_2 or the data volume transmitted by the electronic device using the mobile data link is less than the preset data volume, the control module sends, to a CS, an indication for disabling the mobile data link.

In a case that the entire temperature of the electronic device is greater than temperature threshold_2 or the data volume transmitted by using the mobile data link is less than the preset data volume, the control module sends, to the CS, the indication for disabling the mobile data link. To be specific, if the entire temperature of the electronic device is greater than temperature threshold_2, the control module may send, to the CS, the indication for disabling the mobile data link. If the data volume transmitted by using the mobile data link is less than the preset data volume, the control module may also send, to the CS, the indication for disabling the mobile data link.

In some embodiments of this application, the control module may send, to the CS, the indication for disabling the mobile data link only in a case that the entire temperature of the electronic device is greater than temperature threshold_2. In this case, the control module does not need to consider the data volume transmitted by using the mobile data link.

In some embodiments of this application, the control module may send, to the CS, the indication for disabling the mobile data link only if the data volume transmitted by the electronic device using the mobile data link is less than the preset data volume. In this case, the control module does not need to consider the entire temperature of the electronic device.

In some embodiments of this application, in a case that the entire temperature of the electronic device is greater than temperature threshold_2 and the data volume transmitted by using the mobile data link is less than the preset data volume, the control module sends, to the CS, the indication for disabling the mobile data link.

In some embodiments of this application, in a case that the data volume transmitted by the electronic device using the mobile data link is less than the preset data volume and whether Wi-Fi link quality related information meets preset condition_2, the control module may send, to the CS, the indication for disabling the mobile data link. In this case, the control module does not need to consider the entire temperature of the electronic device.

In some embodiments of this application, in a case that the data volume transmitted by the electronic device using the mobile data link is less than the preset data volume and whether the Wi-Fi link quality related information meets preset condition_2, the control module may send, to the CS, the indication for disabling the mobile data link. In addition, in a case that the entire temperature of the electronic device is greater than temperature threshold_2, the control module may also send, to the CS, the indication for disabling the mobile data link.

In some embodiments of this application, in a case that the entire temperature of the electronic device is greater than temperature threshold_2, the data volume transmitted by the electronic device using the mobile data link is less than the preset data volume and whether the Wi-Fi link quality related information meets preset condition_2, the control module sends, to the CS, the indication for disabling the mobile data link.

It may be understood that the electronic device may further be determined based on parameters such as power of the electronic device and network quality of the mobile data link (for example, mobile data link quality related information). For details, refer to the foregoing. Details are not described herein.

It may be understood that if the Wi-Fi link quality related information meets preset condition_2, a Wi-Fi link quality is good. Preset condition_2 may be the same as preset condition_1, or may be different from preset condition_1.

For example, that the Wi-Fi link quality related information meets preset condition_1 may specifically include: The data transmission rate of the Wi-Fi link is greater than data transmission rate_1. That the Wi-Fi link quality related information meets preset condition_2 may specifically include: The data transmission rate of the Wi-Fi link is greater than data transmission rate_2. Data transmission rate_1 may be the same as data transmission rate_2, or may be different from data transmission rate_2.

Certainly, preset condition_2 may further include a requirement for a range of other types of parameters (for example, a bit error rate and a latency) in the Wi-Fi link quality related information. For details, refer to the foregoing descriptions of preset condition_1. Details are not described herein.

Correspondingly, the CS may receive the indication, sent by the control module, for disabling the mobile data link.

S606: The CS sends, to a Telephony FWK, the indication for disabling the mobile data link.

After receiving the indication, sent by the control module, for disabling the mobile data link, the CS may send, to the Telephony FWK, the indication for disabling the mobile data link.

Correspondingly, the Telephony FWK may receive the indication, sent by the CS, for disabling the mobile data link.

S607: The Telephony FWK disables the mobile data link.

After receiving the indication, sent by the CS, for disabling the mobile data link, the Telephony FWK may disable the mobile data link. In some embodiments of this application, the Telephony FWK may invoke an interface (for example, setInternalDataEnabled) to disable the mobile data link.

S608: The Telephony FWK sends, to the control module, prompt information indicating that the mobile data link is disabled.

It may be understood that because the control module has registered the link connection state callback function, after disabling the mobile data link, the Telephony FWK may send, to the control module, the prompt information indicating that the mobile data link is disabled, so as to notify the control module that a connection state of the mobile data link has changed.

Correspondingly, the control module may receive the prompt information, sent by the Telephony FWK, indicating that the mobile data link is disabled.

S609: The Telephony FWK sends, to the CS, the prompt information indicating that the mobile data link is disabled.

After the Telephony FWK disables the mobile data link, the prompt information indicating that the mobile data link is disabled may be sent to the CS.

Correspondingly, the CS may receive the prompt information, sent by the Telephony FWK, indicating that the mobile data link is disabled.

S610: The CS sends, to a third-party application, the prompt information indicating that the mobile data link is disabled.

After receiving the prompt information, sent by the Telephony FWK, indicating that the mobile data link is disabled, the CS may send, to the third-party application, the prompt information indicating that the mobile data link is disabled.

Correspondingly, the third-party application may receive the prompt information, sent by the CS, indicating that the mobile data link is disabled.

S611: The third-party application transfers all data streams on the mobile data link to a Wi-Fi link for transmission.

After receiving the prompt information, sent by the CS, indicating that the mobile data link is disabled, the third-party application may transfer all the data streams on the mobile data link to the Wi-Fi link for transmission.

It may be understood that a sequence of step S602 and step S603 is not limited in this application.

It may be understood that in addition to the link disabling decision shown in FIG. 6, the electronic device may further make another link disabling decision for scenarios such as an excessively high temperature, an excessively low power, and a poor link quality.

In some embodiments of this application, in a case that the entire temperature of the electronic device exceeds temperature threshold_2, the electronic device may disable either of the Wi-Fi link and the mobile data link. Specifically, the control module in the electronic device may obtain the entire temperature of the electronic device. In a case that the entire temperature of the electronic device is greater than temperature threshold_2, the control module may determine to disable the Wi-Fi link, and send, to the CS, an indication for disabling the Wi-Fi link. Then, the CS sends, to a Wi-Fi link management module, the indication for disabling the Wi-Fi link. The Wi-Fi link management module may disable the Wi-Fi link, and return prompt information for disabling the Wi-Fi link. Alternatively, in a case that the entire temperature of the electronic device is greater than temperature threshold_2, the control module may determine to disable the mobile data link, and send, to the CS, an indication for disabling the mobile data link. Then, the CS sends, to the Telephony FWK, the indication for disabling the mobile data link. The Telephony FWK may disable the mobile data link, and returning prompt information for disabling the mobile data link.

In some embodiments of this application, in a case that the entire temperature of the electronic device exceeds temperature threshold_2, the electronic device may further determine a link to be disabled based on a Wi-Fi link quality and a mobile data link quality. In a possible implementation, in a case that the entire temperature of the electronic device exceeds temperature threshold_2, if a difference between the Wi-Fi link quality and the mobile data link quality is small, the electronic device may disable the mobile data link. In a possible implementation, in a case that the entire temperature of the electronic device exceeds temperature threshold_2, if the difference between the Wi-Fi link quality and the mobile data link quality is large, the electronic device may disable a link with a poorer quality in the Wi-Fi link and the mobile data link.

It may be understood that, that a difference between the Wi-Fi link quality and the mobile data link quality is small may specifically include: A difference between some or all parameters of the same type in the two pieces of link quality related information (i.e. the Wi-Fi link quality related information and the mobile data link quality related information) is less than preset threshold_1. It may be understood that preset threshold_1 corresponding to the difference between different types of parameters may be the same or may be different.

For example, that a difference between the Wi-Fi link quality and the mobile data link quality is small may specifically include: A difference between the data transmission rate of the Wi-Fi link and the data transmission rate of the mobile data link is less than Y1. It may be understood that Y1 may be set according to an actual requirement. This is not limited in this application.

Similarly, that the difference between the Wi-Fi link quality and the mobile data link quality is large may specifically include: The difference between some or all parameters of the same type in the two pieces of link quality related information (i.e. the Wi-Fi link quality related information and the mobile data link quality related information) is greater than preset threshold_2. It may be understood that preset threshold_2 corresponding to the difference between different types of parameters may be the same or may be different.

For example, that the difference between the Wi-Fi link quality and the mobile data link quality is large may specifically include: The difference between the data transmission rate of the Wi-Fi link and the data transmission rate of the mobile data link is greater than Y2. It may be understood that Y2 may be set according to an actual requirement. This is not limited in this application.

It may be understood that for parameters of a same type in the Wi-Fi link quality related information and the mobile data link quality related information, preset threshold_1 corresponding to a difference thereof is less than preset threshold_2 corresponding to the difference thereof. For example, Y1 is less than Y2.

It may be understood that a link with a poorer quality is a link with a lower data transmission rate, a higher bit error rate, and a higher latency.

In some embodiments of this application, the electronic device may set priorities of parameters of different types in the link quality related information. For example, a descending order of the priorities may be: a data transmission rate, a bit error rate, and a latency. Once links with a poorer quality that are obtained for parameters of different types are inconsistent, the electronic device may subject to a link with a poorer quality that is obtained for a parameter of a type with a higher priority.

For example, the data transmission rate of the Wi-Fi link is greater than the data transmission rate of the mobile data link. For the data transmission rate, the electronic device may determine that the quality of the mobile data link is poorer. The bit error rate of the Wi-Fi link is greater than the bit error rate of the mobile data link. For the bit error rate, the electronic device may determine that the quality of the Wi-Fi link is poorer. The latency of the Wi-Fi link is greater than the latency of the mobile data link. For the latency, the electronic device may determine that the quality of the Wi-Fi link is poorer. Because the priority of the data transmission rate is higher than the priority of the bit error rate and the priority of the bit error rate is higher than the priority of the latency, the electronic device is subject to a result determined based on the data transmission rate. To be specific, the electronic device may determine that the quality of the mobile data link is poorer.

In some embodiments of this application, in a case that the Wi-Fi link quality and/or the mobile data link quality meet a condition, the electronic device may disable the Wi-Fi link or the mobile data link. In a possible implementation, if the Wi-Fi link quality is poor (for example, the data transmission rate of the Wi-Fi link is less than data transmission rate_3), the electronic device disables the Wi-Fi link. In a possible implementation, if the mobile data link quality is poor (for example, the data transmission rate of the mobile data link is less than data transmission rate_4), the electronic device disables the mobile data link. In a possible implementation, if the Wi-Fi link quality is poor and the mobile data link quality is good (for example, the data transmission rate of the Wi-Fi link is less than data transmission rate_3, and the data transmission rate of the mobile data link is greater than data transmission rate_5), the electronic device disables the Wi-Fi link. In a possible implementation, if the mobile data link quality is poor and the Wi-Fi link quality is good (for example, the data transmission rate of the mobile data link is less than data transmission rate_2, and the data transmission rate of the Wi-Fi link is greater than data transmission rate_1), the electronic device disables the mobile data link.

It may be understood that data transmission rate_3 may be the same as data transmission rate_1, or may be different from data transmission rate_1. Data transmission rate_4 may be the same as data transmission rate_2, or may be different from data transmission rate_2. Data transmission rate_3, data transmission rate_4, and data transmission rate_5 may be set based on an actual requirement. This is not limited in this application.

In some embodiments of this application, in a case that the power of the electronic device is lower than preset power_1, the electronic device may disable the Wi-Fi link or the mobile data link. For a specific implementation, refer to the foregoing. Details are not described herein. It may be understood that a range of preset power_1 may be [0%, 100%], and a specific value thereof may be set based on an actual requirement. This is not limited in this application. For example, preset power_1 may be 20%.

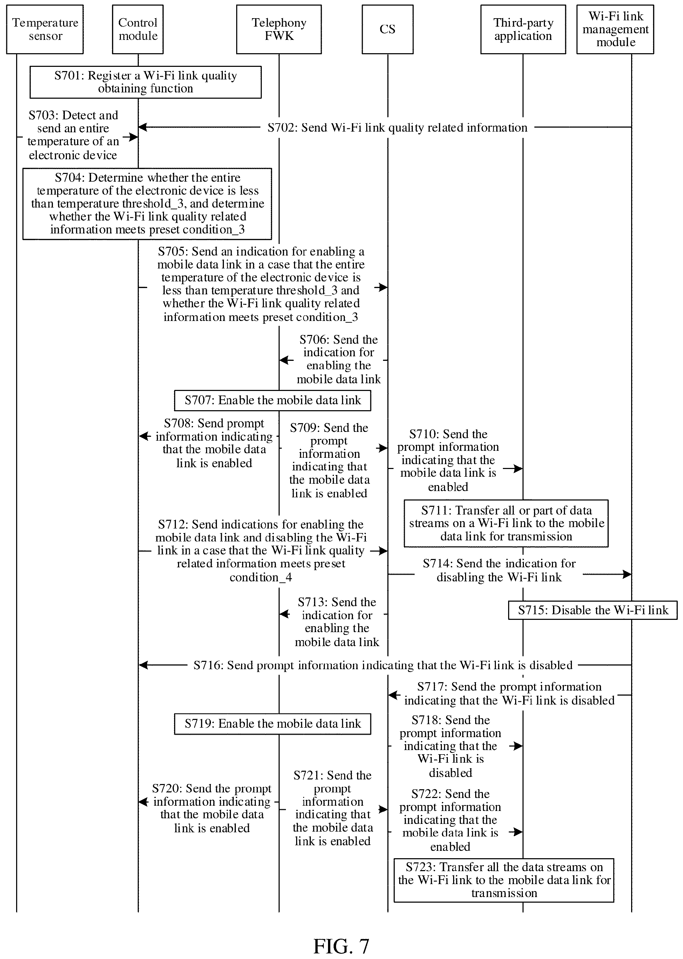

### 3. Transmission of data by using one of a Wi-Fi link and a mobile data link is restored to transmission of data by using the Wi-Fi link and the mobile data link (as shown in FIG. 7).

In a case that a third-party application in an electronic device performs data transmission only by using one of the Wi-Fi link and the mobile data link, for scenarios such as temperature drop, power increase, and a poor quality of a currently enabled link, the electronic device may re-make a link enabling decision.

A specific implementation of one link enabling decision is illustrated below with reference to FIG. 7.

S701: A control module registers a Wi-Fi link quality obtaining function.

S702: A Wi-Fi link management module sends Wi-Fi link quality related information to the control module.

It may be understood that for specific implementations of step S701 and step S702, refer to step S501 and step S502. Details are not described herein.

It may be understood that the control module may further register a link connection state callback function (for example, step S601). This application does not limit a sequence of registering the link connection state callback function and registering the Wi-Fi link quality obtaining function. For related descriptions of registering the link connection state callback function, refer to the foregoing. Details are not described herein.

S703: A temperature sensor detects an entire temperature of an electronic device, and sends the entire temperature of the electronic device to the control module.

It may be understood that for a specific implementation of step S703, refer to step S503 and step S602. Details are not described herein.

Similar to the foregoing, in some embodiments of this application, when the electronic device performs step S701 to step S703, a Wi-Fi link may not be enabled. In some other embodiments of this application, when the electronic device performs step S701 to step S703, the Wi-Fi link is in an enabled state, and the electronic device may transmit data only by using the Wi-Fi link.

S704: The control module determines whether the entire temperature of the electronic device is less than temperature threshold_3, and determines whether the Wi-Fi link quality related information meets preset condition_3.

After receiving the entire temperature of the electronic device sent by the temperature sensor, the control module may determine whether the entire temperature of the electronic device is less than temperature threshold_3. It may be understood that temperature threshold_3 may be set according to an actual requirement. This is not limited in this application. For example, temperature threshold_3 may be 40 degrees Celsius. Similar to temperature threshold_1 and temperature threshold_2, temperature threshold_3 may also be set in a particular temperature range (for example, 39 degrees Celsius to 40 degrees Celsius). It may be understood that temperature threshold_3 is not greater than temperature threshold_2. Preferably, temperature threshold_3 is less than temperature threshold_2.

After obtaining the Wi-Fi link quality related information, the control module may further determine whether the Wi-Fi link quality related information meets preset condition_3. If the Wi-Fi link quality related information meets preset condition_3, the Wi-Fi link quality is poor.

It may be understood that, that the Wi-Fi link quality related information meets preset condition_3 specifically means that some or all parameters in the Wi-Fi link quality related information meet a preset range requirement.

An example in which the Wi-Fi link quality related information includes a data transmission rate of the Wi-Fi link is used. That the Wi-Fi link quality-related information meets preset condition_3 may specifically include: The data transmission rate of the Wi-Fi link is less than data transmission rate_3.

Certainly, in addition to the data transmission rate, the electronic device may further determine preset condition_3 with reference to parameters included in the Wi-Fi link quality related information, such as a bit error rate and a latency. It may be understood that, for related descriptions of preset condition_3, refer to related descriptions of preset condition_1 in step S504. Details are not described herein.

S705: The control module sends, to a CS, an indication for enabling a mobile data link in a case that the entire temperature of the electronic device is less than temperature threshold_3 and the Wi-Fi link quality related information meets preset condition_3.

The control module may send, to the CS, the indication for enabling the mobile data link in a case that the entire temperature of the electronic device is less than temperature threshold_3 and the Wi-Fi link quality related information meets preset condition_3. Correspondingly, the CS may receive the indication, sent by the control module, for enabling the mobile data link.

It may be understood that when the Wi-Fi link quality related information meets preset condition_3, network quality of the Wi-Fi link is poor. For related descriptions of preset condition_3, refer to the following descriptions of preset condition_1 and preset condition_2. Details are not described herein.

S706: The CS sends, to a Telephony FWK, the indication for enabling the mobile data link.

After receiving the indication, sent by the control module, for enabling the mobile data link, the CS may send, to the Telephony FWK, the indication for enabling the mobile data link.

Correspondingly, the Telephony FWK may receive the indication, sent by the CS, for enabling the mobile data link.

S707: The Telephony FWK enables the mobile data link.

S708: The Telephony FWK sends, to the control module, prompt information indicating that the mobile data link is enabled.

S709: The Telephony FWK sends, to the CS, the prompt information indicating that the mobile data link is enabled.

S710: The CS sends, to a third-party application, the prompt information indicating that the mobile data link is enabled.

It may be understood that for specific implementations of step S707 and step S710, refer to step S510 and step S513. Details are not described herein.

S711: The third-party application transfers all or part of data streams on a Wi-Fi link to the mobile data link for transmission.

In some embodiments of this application, after the third-party application receives the prompt information, sent by the CS, indicating that the mobile data link is enabled, the third-party application may transfer part of the data streams originally transmitted on the Wi-Fi link to the mobile data link for transmission.

For example, data stream D1 and data stream D2 in the third-party application are originally transmitted on the Wi-Fi link. After receiving the prompt information, sent by the CS, indicating that the mobile data link is enabled, the third-party application may transmit data stream D1 by using the mobile data link, and transmit data stream D2 by using the Wi-Fi link.

In some embodiments of this application, the quality of the Wi-Fi link is very low (for example, the data transmission rate of the Wi-Fi link is less than data transmission rate_6, data transmission rate_6 is less than data transmission rate_3, and an absolute value of a difference between data transmission rate_6 and data transmission rate_3 is less than a preset value), and the third-party application may transfer all the data streams originally transmitted on the Wi-Fi link to the mobile data link for transmission. It may be understood that the third-party application may obtain the Wi-Fi link quality related information by using the Wi-Fi link management module, so as to determine the quality of the Wi-Fi link.

For example, data stream D1 and data stream D2 in the third-party application are originally transmitted on the Wi-Fi link. After receiving the prompt information, sent by the CS, indicating that the mobile data link is enabled, if the data transmission rate of the Wi-Fi link is less than data transmission rate_6, the third-party application may transmit data stream D 1 and data stream D2 by using the mobile data link.

In some embodiments of this application, based on the foregoing steps, the electronic device may further determine, based on a current Wi-Fi link quality, whether the Wi-Fi link needs to be disabled. The following steps S712 to S723 are specifically included:

S712: The control module sends, to the CS, indications for enabling the mobile data link and disabling the Wi-Fi link in a case that the Wi-Fi link quality related information meets preset condition_4.

The control module may send, to the CS, the indications for enabling the mobile data link and disabling the Wi-Fi link in a case that the Wi-Fi link quality related information meets preset condition_4. It may be understood that, relative to the Wi-Fi link quality when the Wi-Fi link quality related information meets preset condition_3, the Wi-Fi link quality is poorer when the Wi-Fi link quality related information meets preset condition_4.

For example, that the Wi-Fi link quality related information meets preset condition_3 may specifically include: The data transmission rate of the Wi-Fi link is less than data transmission rate_3. That the Wi-Fi link quality related information meets preset condition_4 may specifically include: The data transmission rate of the Wi-Fi link is less than data transmission rate_6. Data transmission rate_6 is less than data transmission rate_3, and the absolute value of the difference between data transmission rate_6 and data transmission rate_3 is less than the preset value.

Certainly, that the Wi-Fi link quality related information meets preset condition_3, and that the Wi-Fi link quality related information meets preset condition_4 may further relate to parameters such as the bit error rate and the latency in the Wi-Fi link quality related information. For details, refer to the foregoing. Details are not described herein.

Correspondingly, the CS may receive the indication, sent by the control module, for enabling the mobile data link and disabling the Wi-Fi link.

S713: The CS sends, to a Telephony FWK, the indication for enabling the mobile data link.

S714: The CS sends, to the Wi-Fi link management module, the indication for disabling the Wi-Fi link.

After receiving the indication, sent by the control module, for disabling the Wi-Fi link, the CS may send, to the Wi-Fi link management module, the indication for disabling the Wi-Fi link.

Correspondingly, the Wi-Fi link management module may receive the indication, sent by the CS, for disabling the Wi-Fi link.

S715: The Wi-Fi link management module disables the Wi-Fi link.

After receiving the indication, sent by the CS, for disabling the Wi-Fi link, the Wi-Fi link management module may disable the Wi-Fi link.

S716: The Wi-Fi link management module sends, to the control module, prompt information indicating that the Wi-Fi link is disabled.

After disabling the Wi-Fi link, the Wi-Fi link management module may send, to the control module, the prompt information indicating that the Wi-Fi link is disabled, so as to notify the control module that the Wi-Fi link is disabled.

Correspondingly, the control module may receive the prompt information, sent by the Wi-Fi link management module, indicating that the Wi-Fi link is disabled. In some embodiments of this application, after receiving the prompt information, the control module may update a saved current connection state of the Wi-Fi link from an enabled state to a disabled state.

S717: The Wi-Fi link management module sends, to the CS, the prompt information indicating that the Wi-Fi link is disabled.

After disabling the Wi-Fi link, the Wi-Fi link management module may send, to the CS, the prompt information indicating that the Wi-Fi link is disabled, to notify the CS that the Wi-Fi link is disabled.

Correspondingly, the CS may receive the prompt information, sent by the Wi-Fi link management module, indicating that the Wi-Fi link is disabled.

S718: The CS sends, to the third-party application, the prompt information indicating that the Wi-Fi link is disabled.

After receiving the prompt information, sent by the Wi-Fi link management module, indicating that the Wi-Fi link is disabled, the CS may send, to the third-party application, the prompt information indicating that the Wi-Fi link is disabled.

Correspondingly, the third-party application may receive the prompt information, sent by the CS, indicating that the Wi-Fi link is disabled.

S719: The Telephony FWK enables the mobile data link.

S720: The Telephony FWK sends, to the control module, prompt information indicating that the mobile data link is enabled.

S721: The Telephony FWK sends, to the CS, the prompt information indicating that the mobile data link is enabled.

S722: The CS sends, to the third-party application, the prompt information indicating that the mobile data link is enabled.

It may be understood that for specific implementations of step S713, step S719 to step S722, refer to step S509 to step S513, and step S706 to step S710. Details are not described herein.

S723: The third-party application entirely transfers data streams on the Wi-Fi link to the mobile data link for transmission.

It may be understood that after receiving the prompt information, sent by the Wi-Fi link management module, indicating that the Wi-Fi link is disabled, and receiving the prompt information, sent by the Telephony FWK, indicating that the mobile data link is enabled, the third-party application may transfer all the data streams originally transmitted by using the Wi-Fi link to the mobile data link for transmission.

It may be understood that a sequence of step S702 and step S703 is not limited in this application, and a sequence of step S713 and step S714 is not limited.

It may be understood that, in a case that the Wi-Fi link is in a disabled state and the mobile data link is in an enabled state, the electronic device may also determine, by using a link enabling decision similar to that shown in FIG. 7, whether to enable the Wi-Fi link.

It may be understood that in addition to the link enabling decision shown in FIG. 7, the electronic device may further make another link enabling decision for scenarios such as temperature drop, power increase, and a poor quality of a currently enabled link.

In some embodiments of this application, in a case that the entire temperature of the electronic device is less than temperature threshold_3, the electronic device may enable a link in a disabled state in the Wi-Fi link and the mobile data link, without considering the quality of the link.

In some embodiments of this application, in a case that the entire temperature of the electronic device is less than temperature threshold_3, the electronic device may determine whether a link needs to be enabled based on the Wi-Fi link quality and the mobile data link quality. In a possible implementation, the Wi-Fi link is in an enabled state, and the mobile data link is in a disabled state. In a case that the entire temperature of the electronic device is less than temperature threshold_3, if the mobile data link quality is good (for example, the data transmission rate of the mobile data link is greater than data transmission rate_1), the electronic device may enable the mobile data link. Similarly, in a case that the Wi-Fi link is in a disabled state and the mobile data link is in an enabled state, the electronic device may also determine, by using the foregoing method, whether to enable the Wi-Fi link.

In some embodiments of this application, in a case that the Wi-Fi link quality and/or the mobile data link quality meet a condition, the electronic device may enable the Wi-Fi link or the mobile data link. In a possible implementation, the Wi-Fi link is in an enabled state, and the mobile data link is in a disabled state. If the mobile data link quality is good (for example, the data transmission rate of the mobile data link is greater than data transmission rate_1) and the Wi-Fi link quality is poor (for example, the data transmission rate of the Wi-Fi link is less than data transmission rate_3), the electronic device may enable the mobile data link. Similarly, the Wi-Fi link is in a disabled state, and the mobile data link is in an enabled state. If the Wi-Fi link quality is good (for example, the data transmission rate of the Wi-Fi link is greater than data transmission rate_1) and the mobile data link quality is poor (for example, the data transmission rate of the mobile data link is less than data transmission rate_2), the electronic device may enable the Wi-Fi link. In a possible implementation, the Wi-Fi link is in an enabled state, and the mobile data link is in a disabled state. If the Wi-Fi link quality is poor, the electronic device may enable the mobile data link. Similarly, in a case that the Wi-Fi link is in a disabled state and the mobile data link is in an enabled state, if the mobile data link quality is poor, the electronic device may enable the Wi-Fi link.

In some embodiments of this application, in a case that the power of the electronic device is higher than preset power_2, the electronic device may disable the Wi-Fi link or the mobile data link. For a specific implementation, refer to the foregoing. Details are not described herein. It may be understood that a range of preset power_2 may be [0%, 100%], and a specific value thereof may be set based on an actual requirement. This is not limited in this application. For example, preset power_2 may be 90%.

Some embodiments of this application provide an electronic device, a computer storage medium, a chip, or a computer program product. The electronic device may be caused to perform any method in the foregoing method embodiments. For details, refer to the foregoing method embodiments. Details are not described herein.

The foregoing embodiments are merely used for describing the technical solutions of this application, but are not intended to limit this application. Although this application is described in detail with reference to the foregoing embodiments, those of ordinary skill in the art should understand that modifications may still be made to the technical solutions described in the foregoing embodiments, or equivalent replacements may be made to the part of the technical features, without departing from the scope of the technical solutions of embodiments of this application.

## Claims

1. A data transmission method, the method comprising:
requesting, by a first application in an electronic device, the electronic device to enable a second network link when the first application transmits data by using a first network link;
enabling, by the electronic device, the second network link in response to the request in a case that a first preset condition is met and the first application meets a second preset condition, so that the first application transmits data by using the first network link and the second network link, wherein the first preset condition is related to a temperature of the electronic device, and/or network quality of the first network link, and/or power of the electronic device; and
skipping responding, by the electronic device, to the request in a case that the first preset condition is met and the first application does not meet the second preset condition, so that the first application transmits data only by using the first network link,
wherein the first network link and the second network link are data transmission links corresponding to different types of networks.

2. The method according to claim 1, wherein that the first application meets a second preset condition specifically comprises: the first application is a preset application, wherein that the first application is a preset application comprises: the first application is an application in a preset application list, or the first application is an application of a preset category.

3. The method according to claim 2, wherein the application of the preset category comprises an application in which a security requirement meets a preset condition.

4. The method according to claim 2 or 3, wherein the application of the preset category comprises an application that requires, when enabled, identity authentication to be performed by using a subscriber identity module (SIM) card of the electronic device, the first network link is a Wi-Fi link, and the second network link is a mobile data link.

5. The method according to any one of claims 2 to 4, wherein the application of the preset category comprises a latency-sensitive application, wherein the latency-sensitive application is an application that requires, when in use, a data transmission latency to be less than a preset latency.

6. The method according to any one of claims 1 to 5, wherein before the requesting, by a first application, the electronic device to enable a second network link, the method further comprises:
determining, by the electronic device, whether the first preset condition is met;
after the requesting, by a first application, the electronic device to enable a second network link, the method further comprises:
determining, by the electronic device, whether the first application meets the second preset condition if the first preset condition is met.

7. The method according to any one of claims 1 to 6, wherein that the first preset condition is met specifically comprises:
the temperature of the electronic device is greater than a first temperature threshold, and/or the network quality of the first network link meets a first network quality condition; that the network quality of the first network link meets a first network quality condition comprises: a data transmission rate of the first network link is greater than a first data transmission rate.

8. The method according to any one of claims 1 to 7, wherein before the requesting, by a first application, the electronic device to enable a second network link, the method further comprises: displaying, by the electronic device, a first interface, wherein the first interface comprises a first icon corresponding to the second network link, and the first icon is in a first state;
after the enabling, by the electronic device, the second network link in response to the request, the method further comprises: displaying, by the electronic device, a second interface, wherein the second interface comprises the first icon, and the first icon is in a second state.

9. The method according to any one of claims 1 to 8, the method further comprising: in a case that the electronic device performs data transmission by using the first network link and the second network link,
disabling, by the electronic device, the first network link if a third preset condition is met; or,
disabling, by the electronic device, the second network link if a fourth preset condition is met;
or,
disabling, by the electronic device, the first network link or the second network link if both the third preset condition and the fourth preset condition are met, disabling, by the electronic device, the first network link if the third preset condition is met and the fourth preset condition is not met, and disabling, by the electronic device, the second network link if the fourth preset condition is met and the third preset condition is not met,
wherein the third preset condition comprises at least one of the following: the temperature of the electronic device is greater than a second temperature threshold, the power of the electronic device is less than a first power, a data volume transmitted by the first network link is less than a first data volume, network quality of the second network link meets a second network quality condition, and the network quality of the first network link meets a third network quality condition;
the fourth preset condition comprises at least one of the following: the temperature of the electronic device is greater than the second temperature threshold, the power of the electronic device is less than the first power, a data volume transmitted by the second network link is less than a second data volume, the network quality of the second network link meets a fourth network quality condition, and the network quality of the first network link meets a fifth network quality condition.

10. The method according to any one of claims 1 to 9, the method further comprising:
enabling, by the electronic device, the first network link in a case that a fifth preset condition is met after the electronic device disables the first network link;
or,
enabling, by the electronic device, the second network link in a case that a sixth preset condition is met after the electronic device disables the second network link,
wherein the fifth preset condition comprises at least one of the following: the network quality of the second network link meets a sixth network quality condition, the temperature of the electronic device is less than a third temperature threshold, and the power of the electronic device is greater than a second power;
the sixth preset condition comprises at least one of the following: the network quality of the first network link meets a seventh network quality condition, the temperature of the electronic device is less than the third temperature threshold, and the power of the electronic device is greater than the second power.

11. The method according to claim 10, wherein types of parameters involved in the third preset condition are less than types of parameters involved in the fifth preset condition or types of parameters involved in the sixth preset condition, and types of parameters involved in the fourth preset condition are less than the types of parameters involved in the fifth preset condition or the types of parameters involved in the sixth preset condition.

12. The method according to claim 10 or 11, wherein
the third preset condition is that the temperature of the electronic device is greater than the second temperature threshold; and the fifth preset condition is that the network quality of the second network link meets the sixth network quality condition, and the temperature of the electronic device is less than the third temperature threshold.

13. A data transmission method, the method comprising:
performing, by an electronic device, data transmission by using a first network link and a second network link;
disabling, by the electronic device, the first network link if a third preset condition is met;
or,
disabling, by the electronic device, the second network link if a fourth preset condition is met;
or,
disabling, by the electronic device, the first network link or the second network link if both the third preset condition and the fourth preset condition are met, disabling, by the electronic device, the first network link if the third preset condition is met and the fourth preset condition is not met, and disabling, by the electronic device, the second network link if the fourth preset condition is met and the third preset condition is not met,
wherein the third preset condition comprises at least one of the following: a temperature of the electronic device is greater than a second temperature threshold, power of the electronic device is less than a first power, a data volume transmitted by the first network link is less than a first data volume, network quality of the second network link meets a second network quality condition, and network quality of the first network link meets a third network quality condition;
the fourth preset condition comprises at least one of the following: the temperature of the electronic device is greater than the second temperature threshold, the power of the electronic device is less than the first power, a data volume transmitted by the second network link is less than a second data volume, the network quality of the second network link meets a fourth network quality condition, and the network quality of the first network link meets a fifth network quality condition.

14. The method according to claim 13, the method further comprising:
enabling, by the electronic device, the first network link in a case that a fifth preset condition is met after the electronic device disables the first network link;
or,
enabling, by the electronic device, the second network link in a case that a sixth preset condition is met after the electronic device disables the second network link,
wherein the fifth preset condition comprises at least one of the following: the network quality of the second network link meets a sixth network quality condition, the temperature of the electronic device is less than a third temperature threshold, and the power of the electronic device is greater than a second power;
the sixth preset condition comprises at least one of the following: the network quality of the first network link meets a seventh network quality condition, the temperature of the electronic device is less than the third temperature threshold, and the power of the electronic device is greater than the second power.

15. The method according to claim 14, wherein types of parameters involved in the third preset condition are less than types of parameters involved in the fifth preset condition or types of parameters involved in the sixth preset condition, and types of parameters involved in the fourth preset condition are less than the types of parameters involved in the fifth preset condition or the types of parameters involved in the sixth preset condition.

16. The method according to claim 14 or 15, the method further comprising at least one of the following:
the third preset condition is that the temperature of the electronic device is greater than the second temperature threshold;
the fifth preset condition is that the network quality of the second network link meets the sixth network quality condition, and the temperature of the electronic device is less than the third temperature threshold;
the first network link is a Wi-Fi link, and the second network link is a mobile data link;
before the first application requests the electronic device to enable the second network link, the electronic device displays a first interface, wherein the first interface comprises a first icon corresponding to the second network link, and the first icon is in a first state; and
after the electronic device enables the second network link in response to the request of the first application, the electronic device displays a second interface, wherein the second interface comprises the first icon, and the first icon is in a second state.

17. An electronic device, comprising one or more memories and one or more processors,
wherein the memory is configured to store a computer program; and the processor is configured to invoke the computer program, to cause the electronic device to perform the method according to any one of claims 1 to 12 or 13 to 16.

18. A computer storage medium, comprising: computer instructions, wherein when the computer instructions are run on an electronic device, the electronic device is caused to perform the method according to any one of claims 1 to 12 or 13 to 16.

19. A data transmission method, the method comprising:
restricting, by an electronic device, an application from enabling a second network link if a first preset condition is met when the electronic device transmits data by using a first network link;
requesting, by a first application in the electronic device, the electronic device to enable the second network link when the first application transmits data by using the first network link;
enabling, by the electronic device, the second network link in response to the request in a case that the first application meets a second preset condition if the electronic device restricts the application from enabling the second network link, so that the first application transmits data by using the first network link and the second network link, wherein the first preset condition is related to a temperature of the electronic device, and/or network quality of the first network link, and/or power of the electronic device;
skipping responding, by the electronic device, to the request in a case that the first application does not meet the second preset condition if the electronic device restricts the application from enabling the second network link, so that the first application transmits data only by using the first network link,
wherein the first network link and the second network link are data transmission links corresponding to different types of networks;
that the first application meets a second preset condition specifically comprises: the first application is a preset application, wherein that the first application is a preset application comprises: the first application is an application in a preset application list, or the first application is an application of a preset category;
the application of the preset category comprises at least one of the following: an application in which a security requirement meets a preset condition, or an application that requires, when enabled, identity authentication to be performed by using a subscriber identity module (SIM) card of the electronic device; in a case that the first application is the application of the preset category, the first network link is a Wi-Fi link, and the second network link is a mobile data link.

20. The method according to claim 19, wherein the application of the preset category comprises a latency-sensitive application, wherein the latency-sensitive application is an application that requires, when in use, a data transmission latency to be less than a preset latency.

21. The method according to claim 19 or 20, wherein before the requesting, by a first application, the electronic device to enable a second network link, the method further comprises:
determining, by the electronic device, whether the first preset condition is met;
after the requesting, by a first application, the electronic device to enable a second network link, the method further comprises:
determining, by the electronic device, whether the first application meets the second preset condition if the first preset condition is met.

22. The method according to any one of claims 19 to 21, wherein that the first preset condition is met specifically comprises:
the temperature of the electronic device is greater than a first temperature threshold, and/or the network quality of the first network link meets a first network quality condition; that the network quality of the first network link meets a first network quality condition comprises: a data transmission rate of the first network link is greater than a first data transmission rate.

23. The method according to any one of claims 19 to 22, wherein before the requesting, by a first application, the electronic device to enable a second network link, the method further comprises: displaying, by the electronic device, a first interface, wherein the first interface comprises a first icon corresponding to the second network link, and the first icon is in a first state;
after the enabling, by the electronic device, the second network link in response to the request, the method further comprises: displaying, by the electronic device, a second interface, wherein the second interface comprises the first icon, and the first icon is in a second state.

24. The method according to any one of claims 19 to 23, the method further comprising: in a case that the electronic device performs data transmission by using the first network link and the second network link,
disabling, by the electronic device, the first network link if a third preset condition is met;
or,
disabling, by the electronic device, the second network link if a fourth preset condition is met;
or,
disabling, by the electronic device, the first network link or the second network link if both the third preset condition and the fourth preset condition are met, disabling, by the electronic device, the first network link if the third preset condition is met and the fourth preset condition is not met, and disabling, by the electronic device, the second network link if the fourth preset condition is met and the third preset condition is not met,
wherein the third preset condition comprises at least one of the following: the temperature of the electronic device is greater than a second temperature threshold, the power of the electronic device is less than a first power, a data volume transmitted by the first network link is less than a first data volume, network quality of the second network link meets a second network quality condition, and the network quality of the first network link meets a third network quality condition;
the fourth preset condition comprises at least one of the following: the temperature of the electronic device is greater than the second temperature threshold, the power of the electronic device is less than the first power, a data volume transmitted by the second network link is less than a second data volume, the network quality of the second network link meets a fourth network quality condition, and the network quality of the first network link meets a fifth network quality condition.

25. The method according to any one of claims 19 to 24, the method further comprising:
enabling, by the electronic device, the first network link in a case that a fifth preset condition is met after the electronic device disables the first network link;
or,
enabling, by the electronic device, the second network link in a case that a sixth preset condition is met after the electronic device disables the second network link,
wherein the fifth preset condition comprises at least one of the following: the network quality of the second network link meets a sixth network quality condition, the temperature of the electronic device is less than a third temperature threshold, and the power of the electronic device is greater than a second power;
the sixth preset condition comprises at least one of the following: the network quality of the first network link meets a seventh network quality condition, the temperature of the electronic device is less than the third temperature threshold, and the power of the electronic device is greater than the second power.

26. The method according to claim 25, wherein types of parameters involved in the third preset condition are less than types of parameters involved in the fifth preset condition or types of parameters involved in the sixth preset condition, and types of parameters involved in the fourth preset condition are less than the types of parameters involved in the fifth preset condition or the types of parameters involved in the sixth preset condition.

27. The method according to claim 25 or 26, wherein
the third preset condition is that the temperature of the electronic device is greater than the second temperature threshold; and the fifth preset condition is that the network quality of the second network link meets the sixth network quality condition, and the temperature of the electronic device is less than the third temperature threshold.
